(19) **Europäisches Patentamt / European Patent Office / Office européen des brevets**

(11) **EP 3 992 911 A1**

(12) **EUROPEAN PATENT APPLICATION**
published in accordance with Art. 153(4) EPC

(43) Date of publication:
**04.05.2022 Bulletin 2022/18**

(21) Application number: **20834794.8**

(22) Date of filing: **13.02.2020**

(51) International Patent Classification (IPC):
**G06T 9/00** $^{(2006.01)}$     **H04N 19/30** $^{(2014.01)}$

(52) Cooperative Patent Classification (CPC):
**G06T 9/00; H04N 19/30**

(86) International application number:
**PCT/KR2020/002042**

(87) International publication number:
**WO 2021/002558 (07.01.2021 Gazette 2021/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2019 KR 20190080229**
**03.10.2019 US 201962910393 P**

(71) Applicant: **LG Electronics Inc.**
**Yeongdeungpo-gu**
**Seoul 07336 (KR)**

(72) Inventors:
• **PARK, Yousun**
**Seoul 06772 (KR)**
• **OH, Sejin**
**Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57) The present invention may comprise the steps of: encoding point cloud data; and/or transmitting a bitstream including the point cloud data and signaling information for the point cloud data. The present invention may comprise the steps of: receiving a bitstream including point cloud data and signaling information; decoding the point cloud data; and/or rendering the point cloud data.

FIG. 1

EP 3 992 911 A1

**Description**

[Technical Field]

The present disclosure provides a method for providing point cloud contents to provide a user with various services such as virtual reality (VR), augmented reality (AR), mixed reality (MR), and self-driving services.

[Background Art]

Point cloud content is content represented by a point cloud, which is a set of points belonging to a coordinate system representing a three-dimensional space. However, tens of thousands to hundreds of thousands of point data are required to represent point cloud content.

In order to meet the requirement for real-time/low latency transmitting, encoding, decoding and redering process, the point cloud data in accordance with some embodiemtns may be divided into a frame, tile or slice unit.

[Disclosure]

[Technical Problem]

An object of the embodiments devised to solve the above-described problems is to provide a point cloud data transmission device, a point cloud data transmission method, a point cloud data reception device, and a point cloud data reception method for efficiently transmitting and receiving a point cloud.

Another object of the embodiments is to provide a device and method for efficiently processing point cloud data. Embodiments provide a point cloud data processing method and device for addressing latency and encoding/decoding complexity.

Another object of the embodiments is to provide a method for partitioning point cloud data for encoding and decoding of the point cloud data.

Another object of the embodiments is to improve the performance of compression of a point cloud by improving the encoding technology for attribute information in geometry-point cloud compression (G-PCC).

The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, in some embodiments, a method for transmitting point cloud data may include: encoding the point cloud data and transmitting a bitstream including the encoded point cloud data and signaling information of the point cloud data.

In some embodiments, a method for transmitting point cloud data includes: dividing the obtained point cloud data into one or more bricks; encoding geometry information of the point cloud data based on the one or more bricks; and encoding attribute information of the point cloud data based on the one or more bricks and reconstructed geometry information.

In some embodiments, the signaling information includes information representing whether the point cloud data are divided into the one or more bricks and/or information representing a method for dividing.

In some embodiments, the method for dividing includes: a first method for dividing based on density of points of the point cloud data, a second method for dividing into one or more sectors based on centroid point information and radius information, a third method for dividing into one or more layers, a fourth method for dividing into one or more spherical regions, a fifth method for dividing based on the attribute information in the point cloud data or a sixth method for dividing based on a length of axes of 3D space including the point cloud data.

In some embodiments, the method for transmitting point cloud data may include combining the encoded geometry information and the encoded attribute information for each of the one or more bricks, the signaling information includes information of a method for combining the encoded geometry information and the encoded attribute information for each of the one or more bricks.

In some embodiments, a method for dividing a brick according to the sixth method includes: first dividing step for dividing a first axis of the 3D space by a length unit of a second axis; and second dividing step for dividing a third axis of the 3D space by the length unit of the second axis. In some embodiments, the signaling information includes information representing a unit of a brick of the first dividing step and information representing a unit of a brick of the second dividing step.

To process the point cloud data efficiently and in accordance with the purpose of the disclosure, in some embodiments, a method for receiving point cloud data may include: receicing a bitstream including the point cloud data and signaling information, decoding the point cloud data and/or redering the point cloud data.

In some embodiments, the received point cloud data includes a geometry bitstream and an attribute bitstream, the decoding the point cloud data includes geometry decoding the geometry bistream of the point cloud data and/or attribute decoding the attribute bistream of the point cloud data based on reconstructed geometry information.

In some embodiments, the signaling information includes information representing whether the point cloud data are divided into the one or more bricks. In some embodiments, the bricks are decoded, independently, when the point cloud data are divided into the one or more bricks.

In some embodiments, when the point cloud data are divided into the one or more bricks, the method for receiving point cloud data includes combining geometry information and attribute information of points in the independently decoded bricks. In some embodiments, the signaling information includes information representing a division type of the one or more bricks and information related to a size of the one or more bricks.

[Advantageous Effects]

A point cloud data transmission method, a point cloud data transmission device, a point cloud data reception method, and a point cloud data reception device according to embodiments may provide a high-quality point cloud service.

A point cloud data transmission method, a point cloud data transmission device, a point cloud data reception method, and a point cloud data reception device according to embodiments may achieve various video codec schemes.

A point cloud data transmission method, a point cloud data transmission device, a point cloud data reception method, and a point cloud data reception device according to embodiments may provide universal point cloud content such as a self-driving service.

Methods and devices for transmitting and receiving point cloud data according to embodiments may carry out a partitioning technique of brick tiling and signal data necessary therefor, thereby improving coding performance for a point cloud.

Methods and devices for transmitting and receiving point cloud data according to embodiments may improve parallel processing and provide scalability by performing spatial adaptive partitioning for independent encoding/decoding of point cloud data.

Methods and devices for transmitting and receiving point cloud data according to embodiments may allow spatially close points to be re-partitioned when independent data partitioning is performed.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates an exemplary point cloud decoder according to embodiments;
FIG. 11 illustrates an exemplary point cloud decoder according to embodiments;
FIG. 12 illustrates an exemplary transmission device according to embodiments;
FIG. 13 illustrates an exemplary reception device according to embodiments;
FIG. 14 illustrates an architecture for streaming G-PCC-based point cloud data according to embodiments;
FIG. 15 illustrates an exemplary point cloud transmission device according to embodiments;
FIG. 16 illustrates an exemplary point cloud reception device according to embodiments;
FIG. 17 shows an exemplary structure operatively connectable with a method/device for transmitting and receiving point cloud data according to embodiments;

FIG. 18 illustrates a point cloud encoder according to embodiments;

FIG. 19 illustrates a point cloud encoder according to embodiments;

FIG. 20 illustrates a method of partitioning point cloud data into one or more regions by a point cloud data encoder according to embodiments;

FIG. 21 illustrates a method of partitioning point cloud data into one or more regions by a point cloud data encoder according to embodiments;

FIG. 22 illustrates a method of partitioning point cloud data into one or more regions by a point cloud data encoder according to embodiments;

FIG. 23 illustrates a method of partitioning point cloud data into one or more regions by a point cloud data encoder according to embodiments;

FIG. 24 illustrates a method of partitioning point cloud data into one or more regions by a point cloud data encoder according to embodiments;

FIG. 25 illustrates a method of partitioning point cloud data into one or more regions by a point cloud data encoder according to embodiments;

FIG. 26 illustrates a method of partitioning point cloud data into one or more regions by a point cloud data encoder according to embodiments;

FIG. 27 illustrates a bitstream combiner of a point cloud data transmission device according to embodiments;

FIG. 28 illustrates a point cloud decoder according to embodiments;

FIG. 29 illustrates a point cloud decoder according to embodiments;

FIG. 30 illustrates a point combiner of a point cloud decoder according to embodiments;

FIG. 31 illustrates an exemplary bitstream structure of point cloud data according to embodiments;

FIG. 32 illustrates a sequence parameter set (SPS) of a bitstream according to embodiments;

FIG. 33 illustrates a tile parameter set (TPS) of a bitstream according to embodiments;

FIG. 34 illustrates a geometry parameter set (GPS) of a bitstream according to embodiments;

FIG. 35 illustrates a geometry slice header (GSH) of a bitstream according to embodiments;

FIG. 36 illustrates an attribute slice header (ASH) of a bitstream according to embodiments;

FIG. 37 is a flowchart illustrating a method of transmitting point cloud data according to embodiments;

FIG. 38 is a flowchart illustrating a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

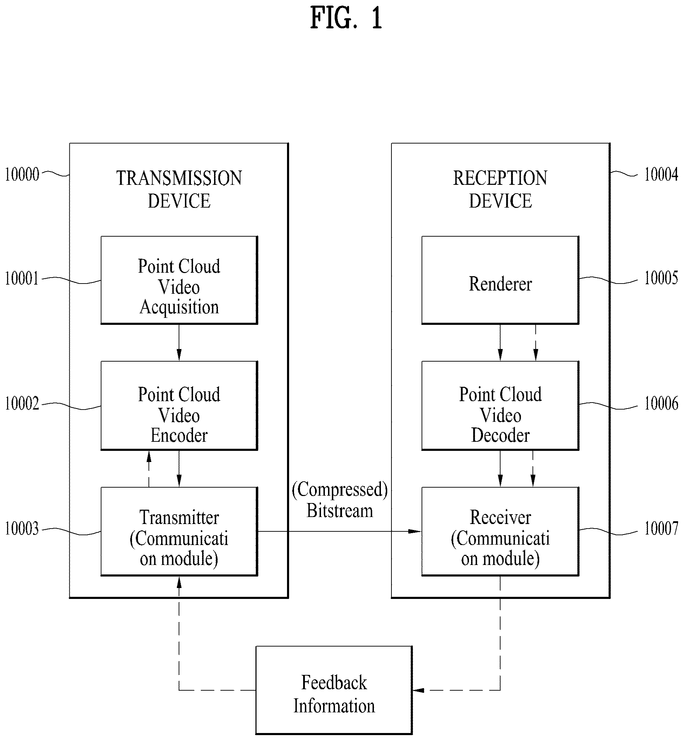

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (for example, in the opposite process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

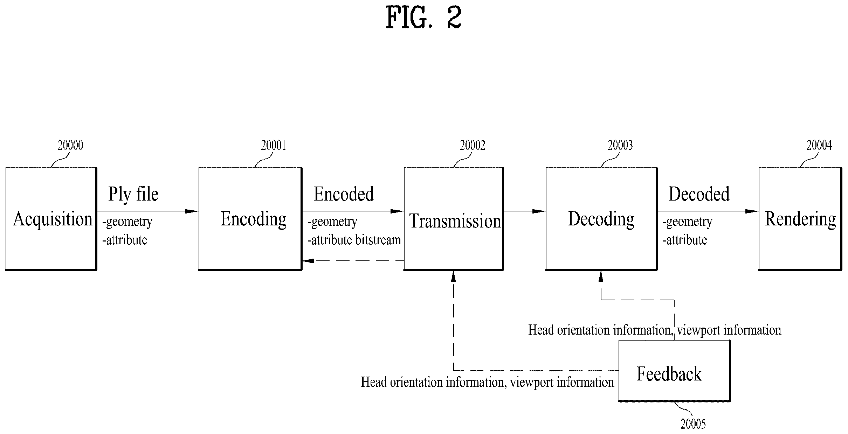

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquirer 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

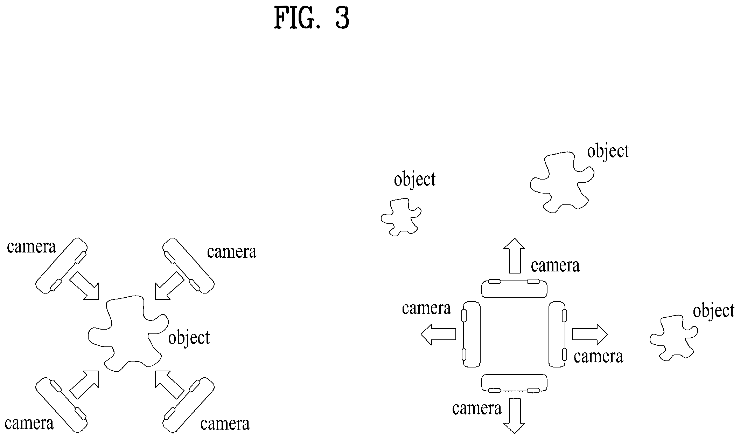

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

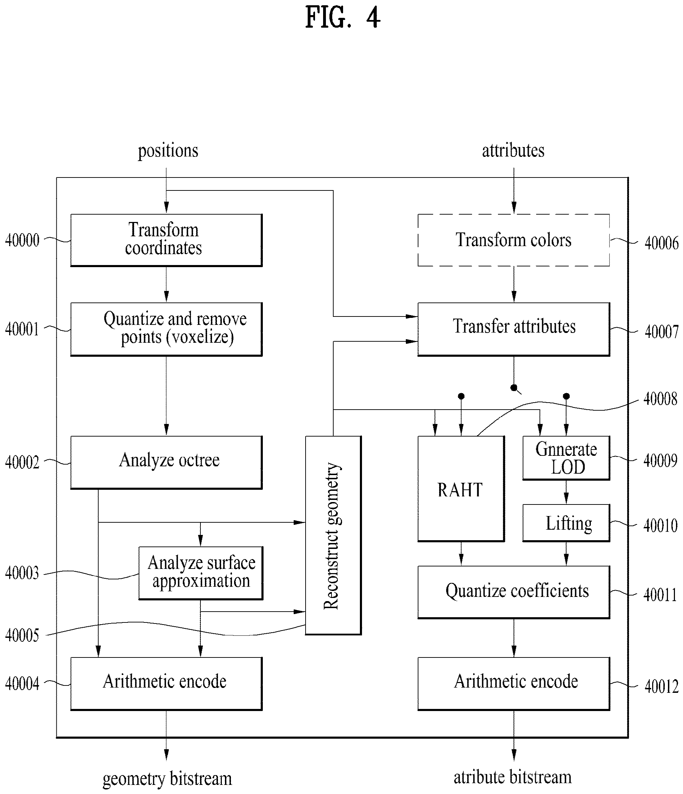

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighbor points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighbor points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

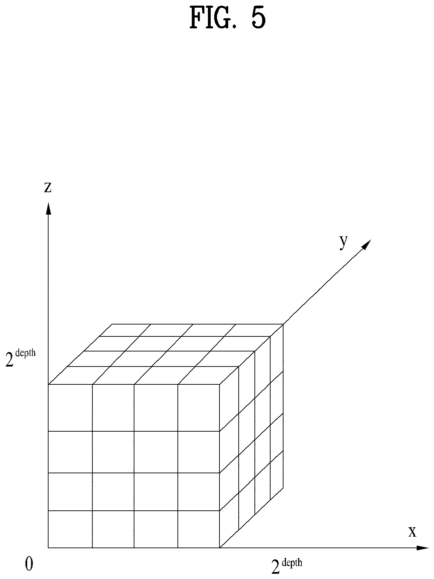

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

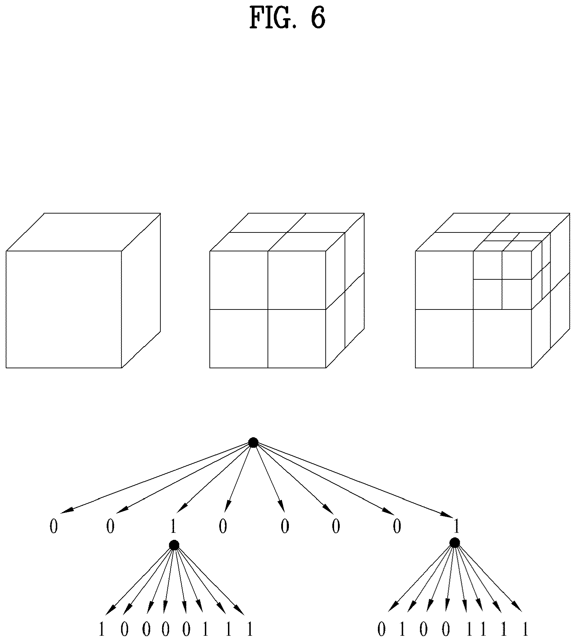

FIG. 6 shows an example of an octree and occupancy code according to embodiments.

As described with reference to FIGS. 1 to 4, the point cloud content providing system (point cloud video encoder 10002) or the point cloud encoder (for example, the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$d = Ceil\left(Log2\left(Max\left(x^{int}_n, y^{int}_n, z^{int}_n, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (for example, the arithmetic encoder 40004) according to the embodiments may perform entropy encoding on the occupancy codes. In order to increase the compression efficiency, the point cloud encoder may perform intra/inter-coding on the occupancy codes. The reception device (for example, the reception device 10004 or the point cloud video decoder 10006) according to the embodiments reconstructs the octree based on the occupancy codes.

The point cloud encoder (for example, the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are

present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: 1) calculating the centroid value of each vertex, 2) subtracting the center value from each vertex value, and 3) estimating the sum of the squares of the values obtained by the subtraction.

$$1) \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad 2) \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad 3) \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE Triangles formed from vertices ordered 1

[Table 1]

| n | Triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

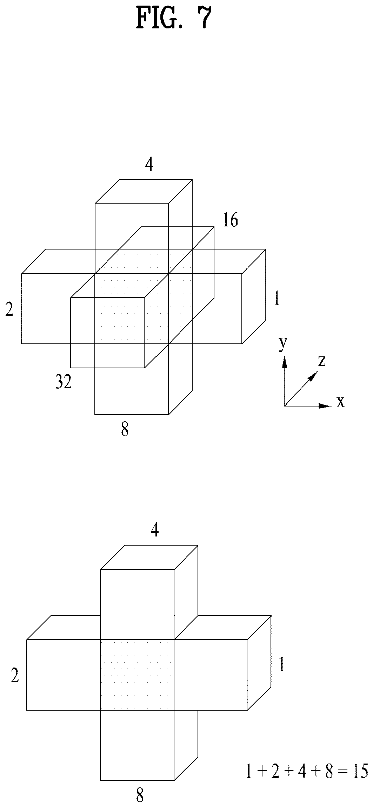

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (for example, the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using 23 = 8 methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The left part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The right part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

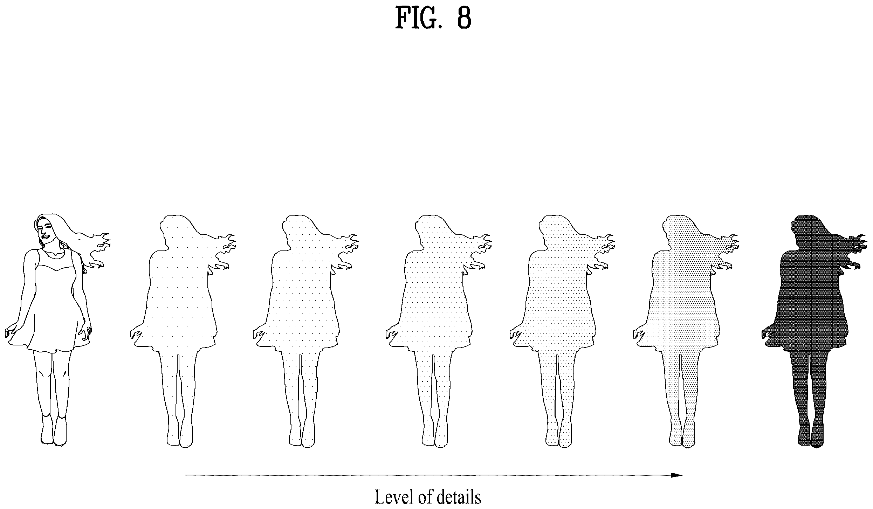

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (for example, the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

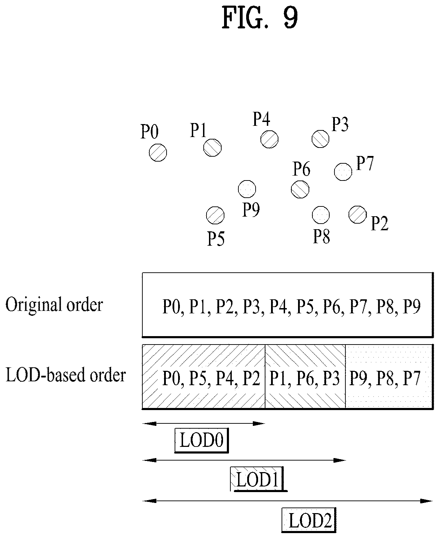

FIG. 9 illustrates an example of point configuration for each LOD according to embodiments.

As described with reference to FIGS. 1 to 8, the point cloud content providing system, or the point cloud encoder (for example, the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighbor points present within a set distance for each LOD, and a distance to the neighbor points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (for example, the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

TABLE Attribute prediction residuals quantization pseudo code

[Table 2]

| int PCCQuantization(int value, int quantStep) { |
| --- |
| if( value >=0) { |
| return floor(value / quantStep + 1.0 / 3.0); |
| } else { |
| return -floor(-value / quantStep + 1.0 / 3.0); |
| } |
| } |

TABLE Attribute prediction residuals inverse quantization pseudo code

[Table 3]

| int PCCInverseQuantization(int value, int quantStep) { |
| --- |
| if( quantStep ==0) { |
| return value; |
| } else { |
| return value * quantStep; |
| } |
| } |

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (for example, the arithmetic encoder 40012) may perform entropy coding on the attributes of the corresponding point without performing the above-described operation.

The point cloud encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level $l$. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are $w1 = w_{l_{2x,y,z}}$ and $w2 = w_{l_{2x+1,y,z}}$

$$\begin{bmatrix} g_{l-1_{x,y,z}} \\ h_{l-1_{x,y,z}} \end{bmatrix} = T_{w1\,w2} \begin{bmatrix} g_{l_{2x,y,z}} \\ g_{l_{2x+1,y,z}} \end{bmatrix} \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (for example, encoding by the arithmetic encoder 400012). The weights are calculated as $w_{l-1_{x,y,z}} = w_{l2x,y,z} + w_{l2x+1,y,z}$ The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

The value of gDC is also quantized and subjected to entropy coding like the high-pass coefficients.

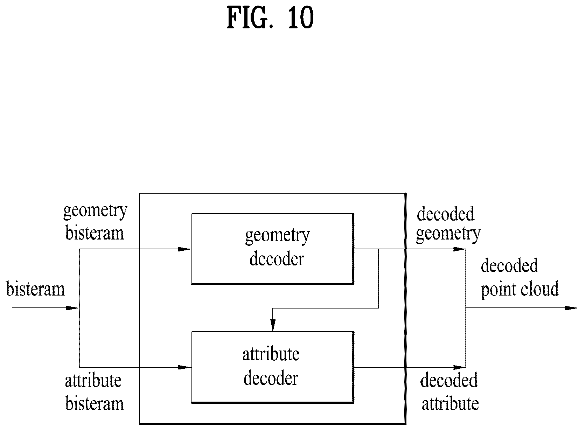

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

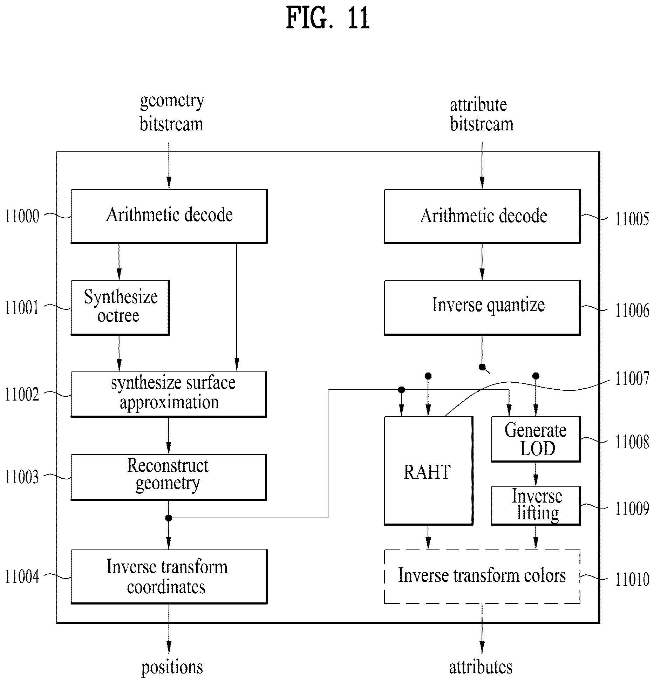

FIG. 11 illustrates a point cloud decoder according to embodiments.

The point cloud decoder illustrated in FIG. 11 is an example of the point cloud decoder illustrated in FIG. 10, and may perform a decoding operation, which is an inverse process of the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

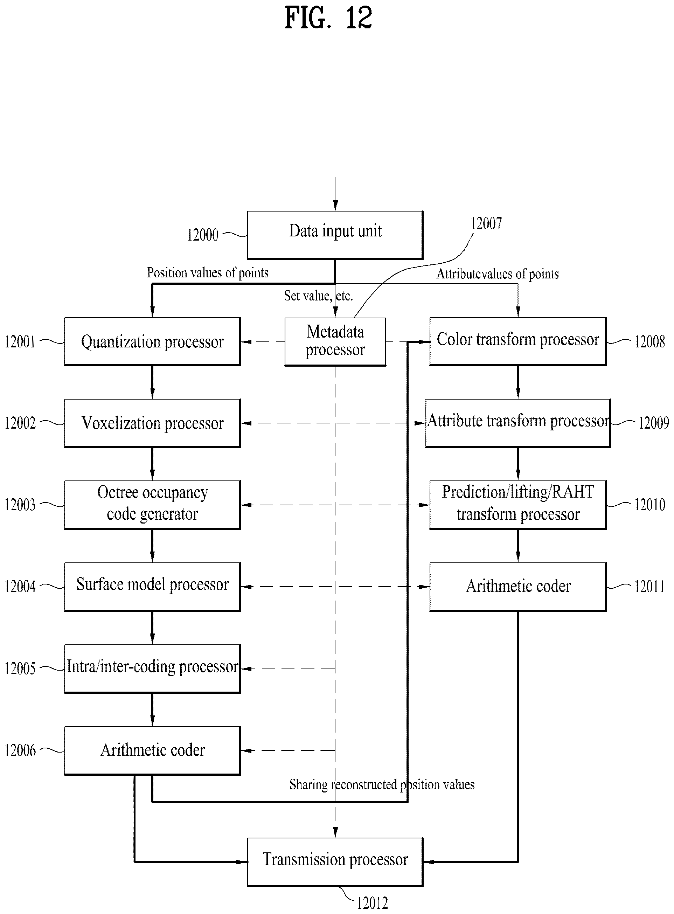

FIG. 12 illustrates an exemplary transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same or similar to the operation and/or method of the point cloud encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream $Geom0^0$ and one or more attribute bitstreams $Attr0^0$ and $Attr1^0$. The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same or similar to the operation and/or transmission method of the transmitter 10003.

Details are the same as those described with reference to FIGS. 1 and 2, and thus a description thereof is omitted.

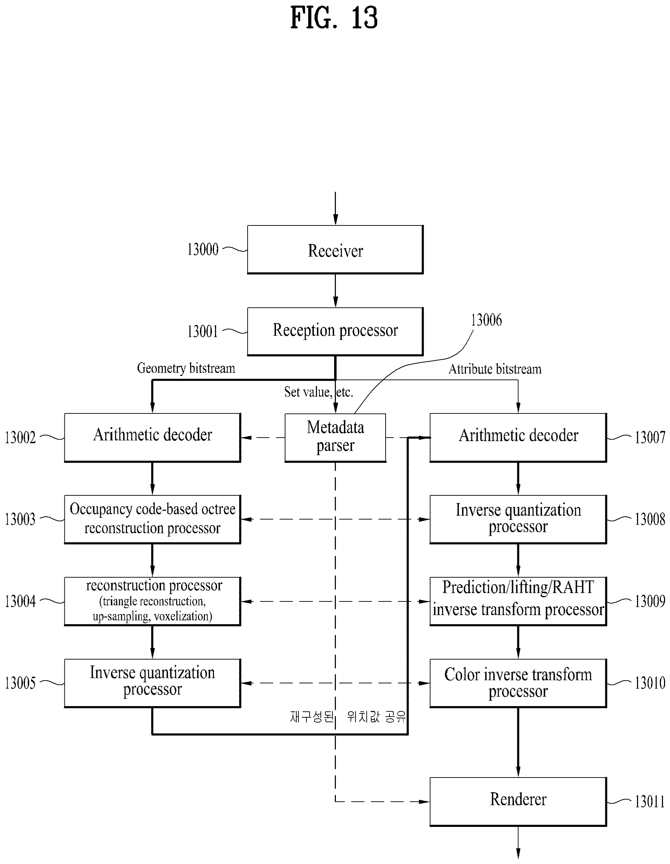

FIG. 13 illustrates an exemplary reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same or similar to those of the point cloud decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, up-sampling, voxelization) based on the surface model method. The surface model processor 1302 performs an operation the same or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same or similar to the operation and/or inverse transform coding of the color inverse transformer 11010. The renderer 13011 according to the embodiments may render the point cloud data.

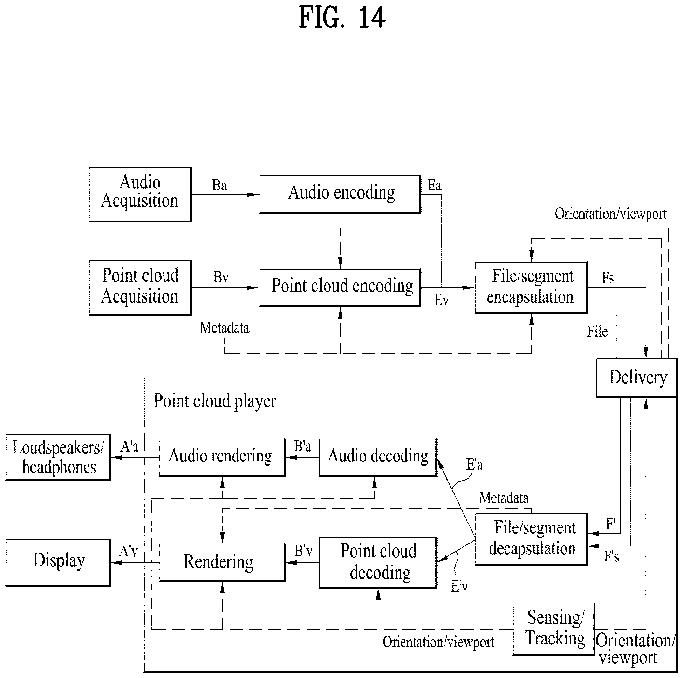

FIG. 14 illustrates an architecture for streaming G-PCC-based point cloud data according to embodiments.

The upper part of FIG. 14 shows a process of processing and transmitting point cloud content by the transmission device described in FIGS. 1 to 13 (for example, the transmission device 10000, the transmission device of FIG. 12, etc.).

As described with reference to FIGS. 1 to 13, the transmission device may acquire audio Ba of the point cloud content (Audio Acquisition), encode the acquired audio (Audio Encoding), and output an audio bitstream Ea. In addition, the transmission device may acquire a point cloud (or point cloud video) Bv of the point cloud content (Point Acquisition), and perform point cloud encoding on the acquired point cloud to output a point cloud video bitstream Eb. The point cloud encoding of the transmission device is the same or similar to the point cloud encoding described with reference to FIGS. 1 to 13 (for example, the encoding of the point cloud encoder of FIG. 4), and thus a detailed description thereof will be omitted.

The transmission device may encapsulate the generated audio bitstream and video bitstream into a file and/or a segment (File/segment encapsulation). The encapsulated file and/or segment Fs, File may include a file in a file format such as ISOBMFF or a DASH segment. Point cloud-related metadata according to embodiments may be contained in the encapsulated file format and/or segment. The metadata may be contained in boxes of various levels on the ISOBMFF file format, or may be contained in a separate track within the file. According to an embodiment, the transmission device may encapsulate the metadata into a separate file. The transmission device according to the embodiments may deliver the encapsulated file format and/or segment over a network. The processing method for encapsulation and transmission by the transmission device is the same as that described with reference to FIGS. 1 to 13 (for example, the transmitter 10003, the transmission step 20002 of FIG. 2, etc.), and thus a detailed description thereof will be omitted.

The lower part of FIG. 14 shows a process of processing and outputting point cloud content by the reception device (for example, the reception device 10004, the reception device of FIG. 13, etc.) described with reference to FIGS. 1 to 13.

According to embodiments, the reception device may include devices configured to output final audio data and final video data (e.g., loudspeakers, headphones, a display), and a point cloud player configured to process point cloud content (a point cloud player). The final data output devices and the point cloud player may be configured as separate physical devices. The point cloud player according to the embodiments may perform geometry-based point cloud compression (G-PCC) coding, video-based point cloud compression (V-PCC) coding and/or next-generation coding.

The reception device according to the embodiments may secure a file and/or segment F', Fs' contained in the received data (for example, a broadcast signal, a signal transmitted over a network, etc.) and decapsulate the same (File/segment decapsulation). The reception and decapsulation methods of the reception device is the same as those described with reference to FIGS. 1 to 13 (for example, the receiver 10005, the reception unit 13000, the reception processing unit 13001, etc.), and thus a detailed description thereof will be omitted.

The reception device according to the embodiments secures an audio bitstream E'a and a video bitstream E'v contained in the file and/or segment. As shown in the figure, the reception device outputs decoded audio data B'a by performing audio decoding on the audio bitstream, and renders the decoded audio data (audio rendering) to output final audio data A'a through loudspeakers or headphones.

Also, the reception device performs point cloud decoding on the video bitstream E'v and outputs decoded video data B'v. The point cloud decoding according to the embodiments is the same or similar to the point cloud decoding described with reference to FIGS. 1 to 13 (for example, decoding of the point cloud decoder of FIG. 11), and thus a detailed description thereof will be omitted. The reception device may render the decoded video data and output final video data through the display.

The reception device according to the embodiments may perform at least one of decapsulation, audio decoding, audio rendering, point cloud decoding, and point cloud video rendering based on the transmitted metadata. The details of the metadata are the same as those described with reference to FIGS. 12 to 13, and thus a description thereof will be omitted.

As indicated by a dotted line shown in the figure, the reception device according to the embodiments (for example, a point cloud player or a sensing/tracking unit in the point cloud player) may generate feedback information (orientation, viewport). According to embodiments, the feedback information may be used in a decapsulation process, a point cloud decoding process and/or a rendering process of the reception device, or may be delivered to the transmission device. Details of the feedback information are the same as those described with reference to FIGS. 1 to 13, and thus a description thereof will be omitted.

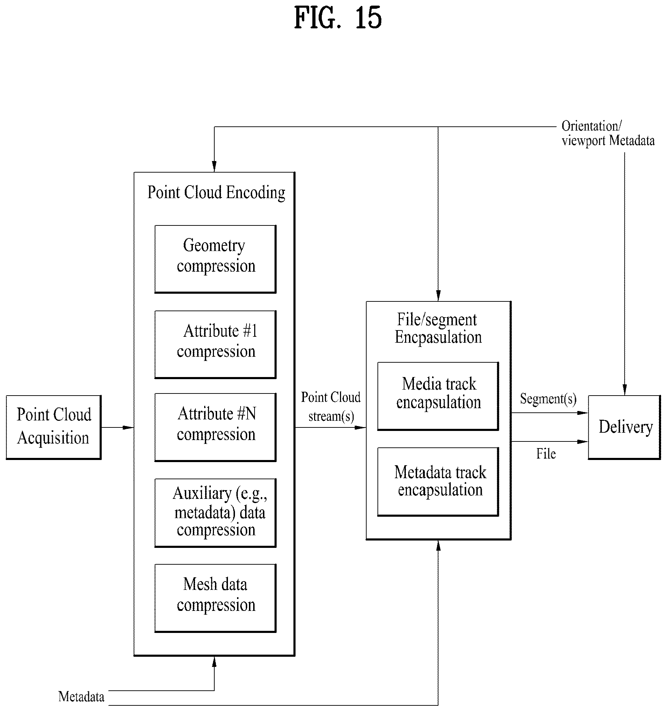

FIG. 15 shows an exemplary transmission device according to embodiments.

The transmission device of FIG. 15 is a device configured to transmit point cloud content, and corresponds to an example of the transmission device described with reference to FIGS. 1 to 14 (e.g., the transmission device 10000 of FIG. 1, the point cloud encoder of FIG. 4, the transmission device of FIG. 12, the transmission device of FIG. 14). Accordingly, the transmission device of FIG. 15 performs an operation that is identical or similar to that of the transmission device described with reference to FIGS. 1 to 14.

The transmission device according to the embodiments may perform one or more of point cloud acquisition, point cloud encoding, file/segment encapsulation and delivery.

Since the operation of point cloud acquisition and delivery illustrated in the figure is the same as the operation described with reference to FIGS. 1 to 14, a detailed description thereof will be omitted.

As described above with reference to FIGS. 1 to 14, the transmission device according to the embodiments may perform geometry encoding and attribute encoding. The geometry encoding may be referred to as geometry compression, and the attribute encoding may be referred to as attribute compression. As described above, one point may have one geometry and one or more attributes. Accordingly, the transmission device performs attribute encoding on each attribute. The figure illustrates that the transmission device performs one or more attribute compressions (attribute #1 compression,..., attribute #N compression). In addition, the transmission device according to the embodiments may perform auxiliary compression. The auxiliary compression is performed on the metadata. Details of the metadata are the same as those described with reference to FIGS. 1 to 14, and thus a description thereof will be omitted. The transmission device may also perform mesh data compression. The mesh data compression according to the embodiments may include the trisoup geometry encoding described with reference to FIGS. 1 to 14.

The transmission device according to the embodiments may encapsulate bitstreams (e.g., point cloud streams) output according to point cloud encoding into a file and/or a segment. According to embodiments, the transmission device may perform media track encapsulation for carrying data (for example, media data) other than the metadata, and perform metadata track encapsulation for carrying metadata. According to embodiments, the metadata may be encapsulated into a media track.

As described with reference to FIGS. 1 to 14, the transmission device may receive feedback information (orientation/viewport metadata) from the reception device, and perform at least one of the point cloud encoding, file/segment encapsulation, and delivery operations based on the received feedback information. Details are the same as those described with reference to FIGS. 1 to 14, and thus a description thereof will be omitted.

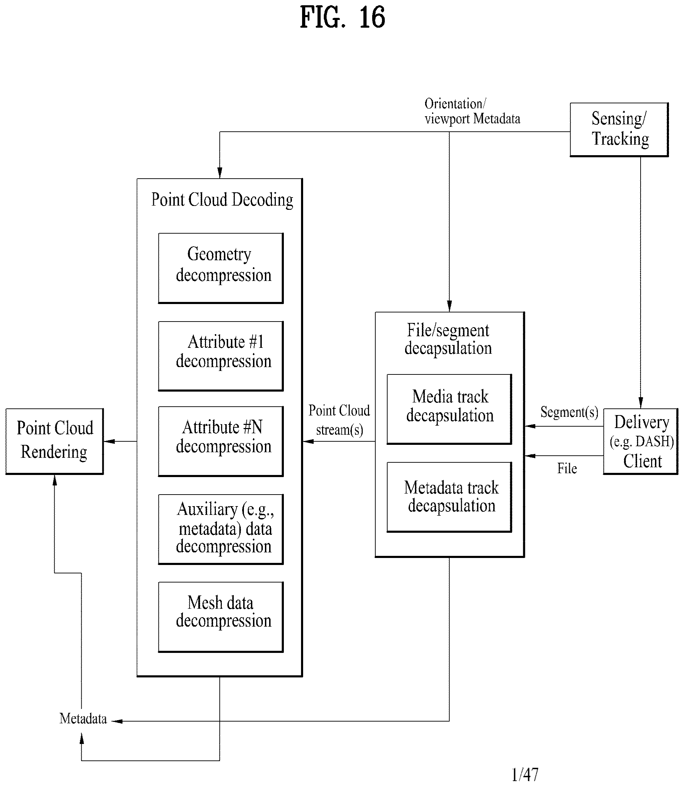

FIG. 16 shows an exemplary reception device according to embodiments.

The reception device of FIG. 16 is a device for receiving point cloud content, and corresponds to an example of the reception device described with reference to FIGS. 1 to 14 (for example, the reception device 10004 of FIG. 1, the point cloud decoder of FIG. 11, and the reception device of FIG. 13, the reception device of FIG. 14). Accordingly, the reception device of FIG. 16 performs an operation that is identical or similar to that of the reception device described with reference to FIGS. 1 to 14. The reception device of FIG. 16 may receive a signal transmitted from the transmission device of FIG. 15, and perform the opposite process of the operation of the transmission device of FIG. 15.

The reception device according to the embodiments may perform at least one of delivery, file/segment decapsulation, point cloud decoding, and point cloud rendering.

Since the point cloud reception and point cloud rendering operations illustrated in the figure are the same as those described with reference to FIGS. 1 to 14, a detailed description thereof will be omitted.

As described with reference to FIGS. 1 to 14, the reception device according to the embodiments decapsulate the file and/or segment acquired from a network or a storage device. According to embodiments, the reception device may perform media track decapsulation for carrying data (for example, media data) other than the metadata, and perform metadata track decapsulation for carrying metadata. According to embodiments, in the case where the metadata is encapsulated into a media track, the metadata track decapsulation is omitted.

As described with reference to FIGS. 1 to 14, the reception device may perform geometry decoding and attribute decoding on bitstreams (e.g., point cloud streams) secured through decapsulation. The geometry decoding may be referred to as geometry decompression, and the attribute decoding may be referred to as attribute decompression. As described above, one point may have one geometry and one or more attributes, each of which is encoded by the transmission device. Accordingly, the reception device performs attribute decoding on each attribute. The figure illustrates that the reception device performs one or more attribute decompressions (attribute #1 decompression, ..., attribute #N decompression). The reception device according to the embodiments may also perform auxiliary decompression. The auxiliary decompression is performed on the metadata. Details of the metadata are the same as those described with reference to FIGS. 1 to 14, and thus a disruption thereof will be omitted. The reception device may also perform mesh data decompression. The mesh data decompression according to the embodiments may include the trisoup geometry decoding described with reference to FIGS. 1 to 14. The reception device according to the embodiments may render the point cloud data that is output according to the point cloud decoding.

As described with reference to FIGS. 1 to 14, the reception device may secure orientation/viewport metadata using a separate sensing/tracking element, and transmit feedback information including the same to a transmission device (for example, the transmission device of FIG. 15). In addition, the reception device may perform at least one of a reception operation, file/segment decapsulation, and point cloud decoding based on the feedback information. Details are the same as those described with reference to FIGS. 1 to 14, and thus a description thereof will be omitted.

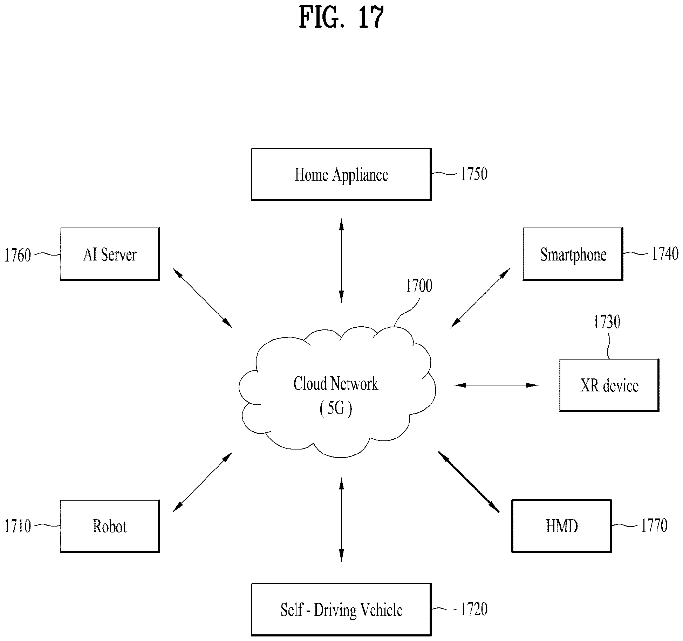

FIG. 17 shows an exemplary structure operatively connectable with a method/device for transmitting and receiving point cloud data according to embodiments.

The structure of FIG. 17 represents a configuration in which at least one of a server 1760, a robot 1710, a self-driving vehicle 1720, an XR device 1730, a smartphone 1740, a home appliance 1750, and/or an HMD 1770 is connected to a cloud network 1700. The robot 1710, the self-driving vehicle 1720, the XR device 1730, the smartphone 1740, or the home appliance 1750 is referred to as a device. Further, the XR device 1730 may correspond to a point cloud data (PCC) device according to embodiments or may be operatively connected to the PCC device.

The cloud network 1700 may represent a network that constitutes part of the cloud computing infrastructure or is present in the cloud computing infrastructure. Here, the cloud network 1700 may be configured using a 3G network, 4G or Long Term Evolution (LTE) network, or a 5G network.

The server 1760 may be connected to at least one of the robot 1710, the self-driving vehicle 1720, the XR device 1730, the smartphone 1740, the home appliance 1750, and/or the HMD 1770 over the cloud network 1700 and may assist at least a part of the processing of the connected devices 1710 to 1770.

The HMD 1770 represents one of the implementation types of the XR device and/or the PCC device according to the embodiments. According to embodiments, an HMD type device includes a communication unit, a control unit, a memory, an I/O unit, a sensor unit, and a power supply unit.

Hereinafter, various embodiments of the devices 1710 to 1750 to which the above-described technology is applied will be described. The devices 1710 to 1750 illustrated in FIG. 17 may be operatively connected/coupled to a point cloud data transmission/reception device according to the above-described embodiments.

<PCC+XR>

The XR/PCC device 1730 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1730 may analyze 3D point cloud data or image data acquired through various sensors or from an external device and generate position data and attribute data about 3D points. Thereby, the XR/PCC device 1730 may acquire information about the surrounding space or a real object, and render and output an XR object. For example, the XR/PCC device 1730 may match an XR object including auxiliary information about a recognized object with the recognized object and output the matched XR object.

<PCC+Self-driving+XR>

The self-driving vehicle 1720 may be implemented as a mobile robot, a vehicle, an unmanned aerial vehicle, or the like by applying the PCC technology and the XR technology.

The self-driving vehicle 1720 to which the XR/PCC technology is applied may represent an autonomous vehicle provided with means for providing an XR image, or an autonomous vehicle that is a target of control/interaction in the XR image. In particular, the self-driving vehicle 1720, which is a target of control/interaction in the XR image, may be distinguished from the XR device 1730 and may be operatively connected thereto.

The self-driving vehicle 1720 having means for providing an XR/PCC image may acquire sensor information from the sensors including a camera, and output the generated XR/PCC image based on the acquired sensor information. For example, the self-driving vehicle 1720 may have an HUD and output an XR/PCC image thereto to provide an occupant with an XR/PCC object corresponding to a real object or an object present on the screen.

In this case, when the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap the object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

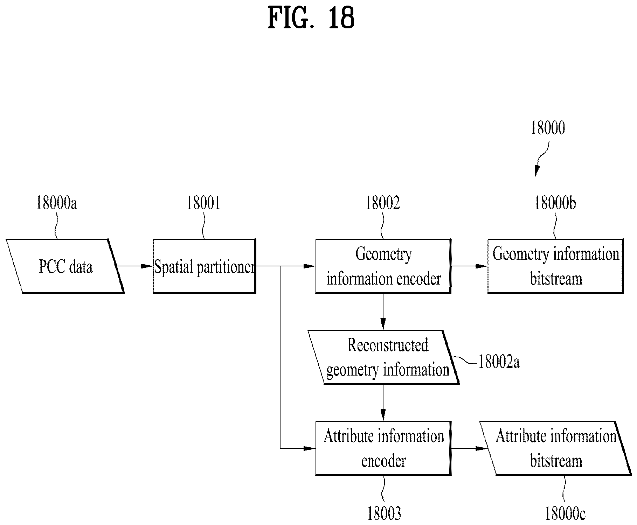

FIG. 18 illustrates a point cloud encoder according to embodiments.

A point cloud encoder 18000 according to the embodiments receives and encodes point cloud data (PCC data) 18000a. The point cloud encoder according to the embodiments outputs a geometry information bitstream 18000b and an attribute information bitstream 18000c. The point cloud encoder 18000 may include a spatial partitioner 18001, a geometry information encoder 18002 and/or an attribute information encoder 18003.

The spatial partitioner 18001 of the point cloud encoder may receive the point cloud data (PCC data) 18000a, and partition the point cloud data into one or more 3D spaces. The spatial partitioner 18001 may receive point cloud data and spatially partition the point cloud data into 3D blocks. The point cloud data may include geometry information and/or attribute information about a point (or points). The spatial partitioner 18001 may spatially partition the point cloud data (PCC data) based on a bounding box and/or a sub-bounding box. The method/device according to the embodiments may perform encoding/decoding based on a partitioned unit (box).

The spatial partitioner 18001 may perform some/all of the point cloud acquisition 10001 of FIG. 1, the acquisition 20000 of FIG. 2, the operations of FIGS. 3 to 5, and the operation of the data input unit 12000 of FIG. 12.

The geometry information encoder 18002 receives the geometry information of the point cloud data (PCC data) and encodes the same. The geometry information may represent position information about the points included in the point cloud data. The geometry information encoder 18002 encodes the geometry information and outputs a geometry information bitstream. The geometry information encoder 18002 may reconstruct position information about the points and output the reconstructed geometry information 18002a. The geometry information encoder 18002 may transmit the reconstructed geometry information to the attribute information encoder 18002.

The geometry information encoder 18002 may perform some/all of the operation of the point cloud video encoder 10002 of FIG. 1, the operation of the encoding 20001 of FIG. 2, the operations of the coordinate transformer 40000, the quantizer 40001, and the octree analyzer 40002, the surface approximation analyzer 40003, the arithmetic encoder 40004, and the geometry reconstructor 40005 of FIG. 4, and the operations of the quantization processor 12001, the voxelization processor 12002, the octree occupancy code generator 12003, the surface model processor 12004, the intra/inter-coding processor 12005, and/or the arithmetic coder 12006 of FIG. 12.

The attribute information encoder 18003 may receive the attribute information of the point cloud data, and encode the attribute information based on the reconstructed geometry information received from the geometry information encoder 18003. The attribute information encoder 18003 encodes the attribute information and outputs an attribute information bitstream 18000c. The attribute information encoder 18003 may perform, for example, prediction transform, lifting transform, and/or region adaptive hierarchical transform (RAHT) according to embodiments. The attribute information encoder 18003 may perform, for example, prediction lifting transform. The prediction lifting transform may mean a combination of some or all of the detailed operations of the prediction transform and/or the lifting transform according to the embodiments.

The point cloud encoder according to the embodiments may perform some, all and/or a combination of prediction transform, lifting transform, and/or RAHT according to the embodiments.

The attribute information encoder 18003 may perform some/all of the operation of the point cloud video encoder 10002 of FIG. 1, the operation of the encoding 20001 of FIG. 2, the operations of the color transformer 40006, attribute transformer 40007, RATH transformer 40008, LOD generator 40009, lifting transformer 40010, coefficient quantizer 40011, and/or arithmetic encoder 40012 of FIG. 4, and the operations of the color transform processor 12008, attribute transform processor 12009, prediction/lifting/RAHT transform processor 12010 and arithmetic coder 12011 of FIG. 12.

Here, the reconstructed geometry information 18002c may represent an octree reconstructed by the geometry reconstructor (Reconstruct geometry) 40005 described with reference to FIG. 4 and/or an approximated octree. The reconstructed geometry information may represent the occupancy code described with reference to FIG. 6 or represent an octree structure. The reconstructed geometry information may represent an octree occupancy code generated by the octree occupancy code generator 12003 described with reference to FIG. 12.

The attribute information encoder 18003 may encode the attribute information of the point cloud data according to embodiments. Here, the encoder 18003 may encode the attribute information based on the reconstructed geometry information. The attribute information encoder 18003 may generate a bitstream containing the attribute information by encoding the received data.

The attribute information encoder 18003 according to the embodiments may include the color transformer 40006, the attribute transformer 40007, the RAHT transformer 40008, the LOD generator 40009, the lifting transformer 40010, and the coefficient quantizer 40011, and/or the arithmetic encoder 400012 of FIG. 4.

Point cloud data according to embodiments may be classified into category 1 and category 3 according to the characteristic of the data. Category 1 data may be static data and be composed of one frame. Category 3 data may be dynamic data and be composed of N frames. A ply file, which is a file format of point cloud data, may be composed of multiple points according to a data acquisition method.

According to embodiments, a point may include position information (geometry information) and attribute information including color information, reflectance information, time information, and normal vector information about the point. According to embodiments, the point may include various kinds of information depending on the condition to be presented. Category 1 data and Category 3 data, which are composed of points, may include a frame including a large quantity of points. However, when the point cloud data transmission device according to the embodiments receives and encodes a frame including points, latency and unnecessary use of resources may be caused.

Accordingly, for the point cloud data transmission device according to the embodiments, the operations of transmitting and encoding point cloud data, the decoding operation of the reception device, and the operation of rendering processing of the reception device may be performed in real time, and the point cloud data may be partitioned into a plurality of regions so as to be processed with low latency. The point cloud data transmission device according to the embodiments may partition a frame of the point cloud data into tiles, slices, and/or bricks.

Accordingly, the point cloud data transmission device may partition the point cloud data according to an independent data partitioning method for improving parallel processing capability and scalability for 3D point cloud data. The independent data partitioning may include spatial adaptive partitioning as a method to support re-partitioning of points spatially close to each other.

According to embodiments, a method of transmitting point cloud data may include encoding the point cloud data and transmitting a bitstream including the point cloud data and signaling information about the point cloud data. The point cloud data transmission method may include dividing the obtained point cloud data into one or more bricks, encoding geometry information of the point cloud data based on the one or more bricks, and/or encoding attribute information of the point cloud data based on the one or more bricks and reconstructed geometry information.

The point cloud data transmission device according to the embodiments may partition the point cloud data and independently encode the same, thereby enabling random access and parallel encoding in a 3D space occupied by the point cloud data.

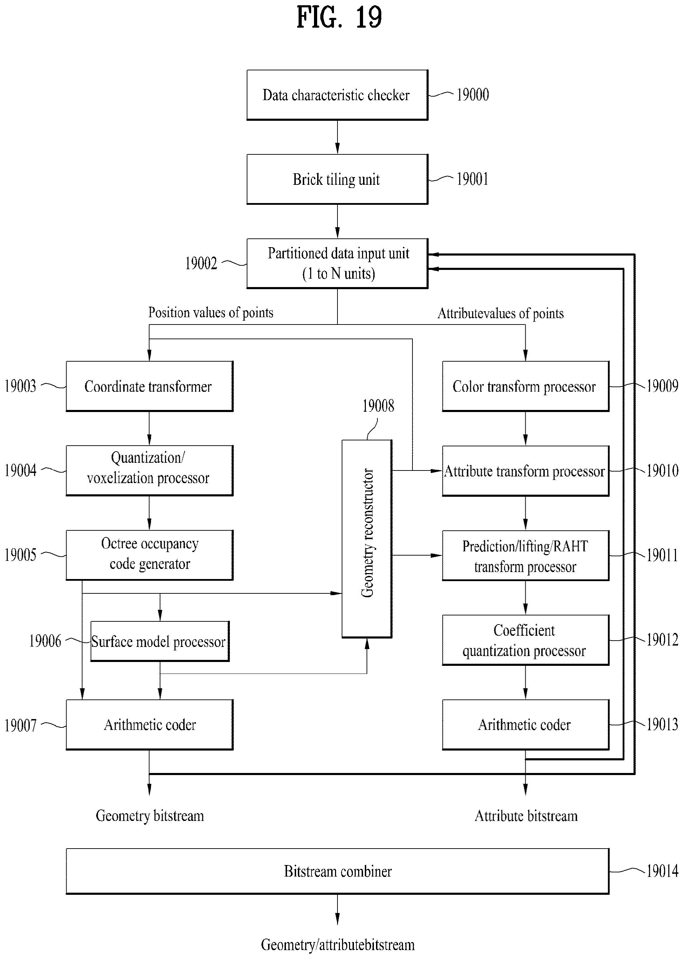

FIG. 19 illustrates a point cloud encoder according to embodiments.

The point cloud encoder according to the embodiments may include a data characteristic checker 19000, a brick tiling unit 19001, a partitioned data input unit 19002, a coordinate transformer 19003, a quantization/voxelization processor 19004, an octree occupancy code generator 19005, a surface model processor 19006, a first arithmetic coder 19007, a geometry reconstructor 19008, a color transform processor 19009, an attribute transform processor 19010, a prediction/lifting/RAHT transform processor 19011, a coefficient quantization processor 19012, a second arithmetic coder 19013, and/or a bitstream combiner 19014.

The point cloud data encoder represents an example of the point cloud data encoder 18000 of FIG. 18. According to the embodiments, the encoder may be referred to as an encoding device, and the decoder may be referred to as a decoding device.

The data characteristic checker 19000 receives the point cloud data and checks the characteristic of the received point cloud data. For example, the data characteristic checker 19000 may check whether points of the point cloud data are densely distributed in a specific region and sparsely distributed in the specific region. The data characteristic checker 19000 may check whether the point cloud data is composed of a point cloud sequence including a plurality of frames, as in the case of LiDAR data or data for self-driving. The data characteristic checker 19000 may check whether point cloud data within one frame are gathered in a specific region (for example, whether consecutive attribute information values are gathered on the left, right, top, bottom, front or back). The data characteristic checker 19000 may check whether objects represented by the point cloud data are spaced apart from each other. The data characteristic checker 19000 may check whether the 3D space occupied by the point cloud data is extended in one direction (when, for example, a specific axis is excessively longer than the other axes).

The tiling unit 19001 receives the point cloud data, and generates one or more tiles, one or more slices, or one or more bricks from the received point cloud data. That is, the brick tiling unit 19001 may partition the point cloud data into tiles, slices, or bricks. The brick tiling unit 19001 outputs the partitioned point cloud data on a tile-by-tile, slice-by-slice, or brick-by-brick basis.

A tile may mean a partial region of a 3D space occupied by the point cloud data. According to embodiments, a tile may include one or more slices. As the tile is partitioned into one or more slices, the point cloud data encoder may encode the point cloud data in parallel. The point cloud data encoder may perform quantization and/or transformation on each of the one or more slices of a tile differently according to the characteristic of the data.

A slice may mean a unit of data that the point cloud data transmission device and reception device encode and decode. A slice may be a set of data in a 3D space occupied by the point cloud data, or may be a set of some data among the point cloud data. A slice may represent a region of points or a set of points included in the tile. The tile may be partitioned into one or more slices based on the number of points included in the tile. For example, a tile may be a set of points divided according to the number of points. A tile may be partitioned into slices based on the number of points, and some data may be split or merged in the partition process.

A block may mean a unit in which point cloud data included in a slice is partitioned for each point. For example, a block may be a partial region of a 3D space occupied by the cloud data in one slice, and represent a detailed unit in which the point cloud data transmission device and reception device may perform encoding and decoding.

A brick may refer to the block or the slice. That is, a brick may a slice or a set or region of points for which point cloud data is partitioned. According to embodiments, a brick may be referred to as a region.

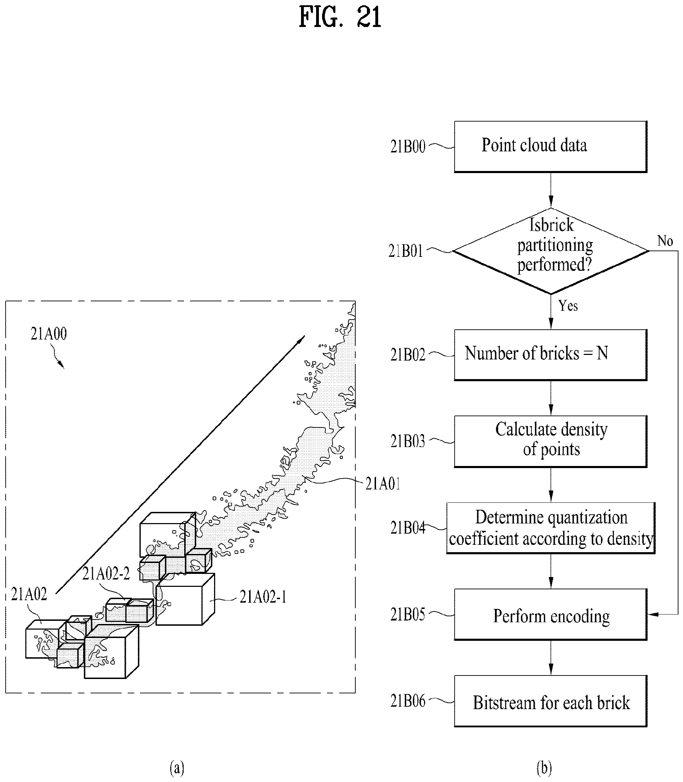

The brick tiling unit 19001 may perform partitioning based on various partitioning methods according to characteristic of data, such as point density-based brick tiling, circular sector brick tiling, layer brick tiling, spherical/oval region tiling, attribute-based brick tiling, and axis-based adaptive partitioning. A method of performing the partitioning will be described later with reference to FIGS. 21 to 26.

For example, when it is determined by the data characteristic checker 19000 that the points of the point cloud data are densely distributed in a specific region and sparsely distributed in a specific region, the brick tiling unit 19001 may perform partitioning based on the point density-based brick tiling.

For example, when it is determined by the data characteristic checker 19000 that the point cloud data is composed of a point cloud sequence including a plurality of frames, as in the case of LiDAR data or data for self-driving, the brick tiling unit 19001 may perform partitioning based on the circular sector brick tiling. When it is determined by the data characteristic checker 19000 that the point cloud data within one frame are grouped in a specific region, the brick tiling unit 19001 may perform partitioning based on the layer brick tiling. When it is determined by the data characteristic checker 19000 that the objects represented by the point cloud data are spaced apart from each other, the brick tiling unit 19001 may perform partitioning based on the spherical/oval region tiling. When the 3D space occupied by the point cloud data is extended in one direction, the data characteristic checker 19000 may perform partitioning based on the axis-based adaptive partitioning.

According to embodiments, the point cloud data may be partitioned into a plurality of slices. There may be several methods of partitioning point cloud data into a plurality of slices. According to embodiments, the point cloud data included in a slice may be independently encoded. The point cloud data transmission device and reception device according to the embodiments may prevent errors from being accumulated in the encoding and decoding process by performing encoding and decoding independently on a slice-by-slice basis.

A slice may mean a unit in which a point cloud frame in the point cloud data is partitioned for the encoding operation. The point cloud data may be partitioned into a plurality of slices according to a slice partitioning scheme.

According to embodiments of a method of partitioning point cloud data into a plurality of slices, partitioning may be performed based on variance of color information in order to ensure color continuity. For example, when variance of color information in a region of a specific point cloud or point cloud data is greater than a first threshold, the data or region may be regarded as a non-smooth block. When the proportion of the non-smooth block to the entire point cloud data is greater than a second threshold, blocks corresponding to the non-smooth block (or some points included in the non-smooth block) may be extracted and separated into a first slice, and the remaining unseparated cloud data may be separated into a second slice. According to embodiments, the variance of the color information may be calculated to separate the first slice and the second slice. A kd tree may be used for variance of the color information.

The k-d tree (kd tree) according to the embodiments is a type of binary tree and represents a hierarchy for partitioning a k-dimensional space. The kd-tree scheme refers to a method of geometry-adaptively partitioning point cloud data into slices.

According to embodiments, a slice may be called by various terms such as a brick, a block, a macroblock, and/or a tile.

The partitioned data input unit 19002 receives the partitioned point cloud data output by the brick tiling unit 19001. The partitioned data input unit 19002 outputs position information (geometry information) and attribute information about points in each of the bricks (or slices or tiles). The partitioned data input unit 19002 transfers the position information about the points to the coordinate transformer 19003 on a brick-by-brick (or slice-by-slice or tile-by-tile) basis, and transfers the attribute information about the points to the color transform processor 19009.

The data characteristic checker 19000, the brick tiling unit 19001, and/or the partitioned data input unit 19002 may be included in the spatial partitioner 18001 of FIG. 18.

The coordinate transformer 19003 may receive the position information (geometry information) about the points according to the embodiments and may transform the coordinate information thereabout. The coordinate transformer 19003 may transfer the transformed coordinate information to the quantization/voxelization processor 19004. The coordinate transformer 19003 may perform the operation of the coordinate transformer 40000 of FIG. 4.

The quantization/voxelization processor 19004 may perform quantize and/or voxelize the position information about the points from the coordinate transformer 19003. The quantization/voxelization processor 19004 may transmit the quantized and/or voxelized position information (geometry information) about the points to the octree occupancy code generator 19005. The quantization/voxelization processor 19004 may perform the operations of the quantization/voxelization processor 40001 of FIG. 4 and the voxelization processor 12002 of FIG. 12.

The octree occupancy code generator 19005 may receive the quantized and/or voxelized geometry information and generate an octree occupancy code based on the quantized and/or voxelized geometry information. The octree occupancy code may include a data structure representing the position information about the points. The octree occupancy code generator 19005 may transfer the octree occupancy code to the first arithmetic coder 19007, the surface model processor 19006, and/or the geometry reconstructor 19008. The octree occupancy code generator 19005 may perform the operations of the octree analyzer 40002 of FIG. 4 and the octree occupancy code generator 12003 of FIG. 12.

The surface model processor 19006 may receive the octree occupancy code and process the surface model. The surface model processor 19006 may output the geometry information with the processed surface model and transmit the same to the first arithmetic coder 19007. The surface model processor 19006 may perform the operations of the surface approximation analyzer 40003 of FIG. 4 and the surface model processor 12004 of FIG. 12.

The first arithmetic coder 19007 may receive an octree occupancy code according to embodiments and/or an octree occupancy code on which surface model processing has been performed, and encode the same. The first arithmetic coder 19007 may output a geometry bitstream. The first arithmetic coder 19007 may transmit the geometry bitstream to the bitstream combiner. The first arithmetic coder 19007 may perform the operations of the arithmetic encoding 40004 of FIG. 4 and the arithmetic coder 12006 of FIG. 12.

The first arithmetic coder 19007 may transmit information related to whether the geometry information is encoded for a corresponding brick (or slice or tile) to the partitioned data input unit 19002.

The geometry reconstructor 19008 receives the octree occupancy code to according to the embodiments and/or the octree occupancy code on which surface model processing has been performed, and reconstructs the geometry information based thereon. The geometry reconstructor 19008 may generate Morton codes according to embodiments and reconstruct geometry information based thereon. The geometry reconstructor 19008 may perform the operation of the geometry reconstructor 40005 of FIG. 4.

The color transform processor 19009 may receive the attribute information about the points and may transform the color information of the attribute information. The color transform processor may output the transformed attribute information and transmit the same to the attribute transform processor 19010. The color transform processor 19009 may perform the operations of the color transformer 40006 of FIG. 4 and the color transform processor 12008 of FIG. 12.

The attribute transform processor 19010 may map the position information about the points, the attribute information color-transformed by the color transform processor 19009, and/or the geometry information reconstructed by the geometry reconstructor 19008, and perform attribute transform processing. The attribute transform processor 19010 may perform the operations of the attribute transformer 40007 of FIG. 4 and the attribute transform processor 12009 of 12.

The prediction/lifting/RAHT transform processor 19011 may transform the attribute information obtained through transform processing by the attribute transform processor 19010 according to the prediction, lifting, and/or RAHT technique. The prediction/lifting/RAHT transform processor 19011 may output the attribute information transformed according to the prediction, lifting, and/or RAHT, and may transmit the same to the coefficient quantization processor 19012. The prediction/lifting/RAHT transform processor 19011 may perform the operations of the RAHT 40008, LOD generator 40009 and/or lifting 40010 of FIG. 4, and the prediction/lifting/RAHT transform processor 12010 of FIG. 12

The coefficient quantization processor 19012 may receive the attribute information transformed by the prediction/lifting/RAHT transform processor 19011 and quantize the same. The coefficient quantization processor 19012 may transmit the quantized attribute information to the second arithmetic coder 19013. The coefficient quantization processor 19012 may perform the operation of the coefficient quantizer 40011 of FIG. 4.

The second arithmetic coder 19013 may receive the attribute information quantized by the coefficient quantization processor 19012 and encode the same. The second arithmetic coder 19013 may output an attribute bitstream containing the encoded attribute information. The second arithmetic coder 19013 may output attribute bitstreams and transmit the same to the bitstream combiner 19014.

The second arithmetic coder 19013 may transmit, to the partitioned data input unit 19002, information related to whether the attribute information is encoded for a corresponding brick (or slice or tile). The second arithmetic coder 19013 may perform the operations of the arithmetic encoder 40012 of FIG. 4 and the arithmetic coder 12011 of FIG. 12.

The bitstream combiner 19014 may combine the geometry bitstream and/or the attribute information bitstream. The bitstream combiner 19014 may combine the geometry bitstream and the attribute bitstream on a brick-by-brick (or slice-by-slice or tile-by-tile) basis.

The point cloud data transmission device according to the embodiments may include the data characteristic checker 19000, the brick tiling unit 19001, the partitioned data input unit 19002, and the bitstream combiner 19014. The point cloud data transmission device may partition the point cloud data into one or more bricks through the brick tiling unit according to, for example, brick_tiling_filter information. The point cloud data is partitioned into N regions by the brick tiling unit 19001 and input to the partitioned data input unit 19002. The point cloud data in each of the N partitioned bricks is divided into position information about points and attribute information about the points which are to be encoded. When the encoding process is performed on each of the N bricks, the position information about the points and the attribute information about the points encoded by the bitstream combiner 19014 may be combined into one bitstream.

The point cloud data transmission device according to the embodiments may partition the point cloud data into one or more bricks using the brick tiling unit 19001, and encode each region by encoding each of the partitioned bricks. In this case, data of a region necessary for the point cloud data reception device and a region that is less important may be divided, and thus encoding may be performed efficiently. Accordingly, the point cloud data transmission device may increase encoding efficiency by the above-described configuration.

The point cloud data encoder according to the embodiments may partition the point cloud data into one or more tiles, slices, blocks, and/or bricks, and set quantization differently for each of the partitioned units. By partitioning the point cloud data in this way, the point cloud data encoder may differentially encode the points of different importances. In addition, the point cloud data reception device may efficiently decode the differentially encoded data and provide important information to a user quickly.

The point cloud data transmission device may provide an encoding method optimized for the characteristic of the data by partitioning the point cloud data into one or more bricks and encoding the same on a brick-by-brick basis. For example, in the case of point cloud data containing points densely distributed in a specific region, an error that may occur during encoding may be reduced by partitioning and encoding the region of the densely distributed points. For example, in the case of a data sequence composed of a plurality of frames, such as LiDAR data or self-driving data, the encoding error for each frame may be reduced by partitioning and encoding the point cloud data using the technique of circular sector brick tiling, which will be described later.

The point cloud data transmission device and reception device according to the embodiments may prevent errors from being accumulated in the encoding process and decoding process by independently performing encoding and decoding on a slice-by-slice basis.

The point cloud data transmission device may perform the partitioning operation based on a partitioning method that is adaptively performed according to requirements that may be given in various processing situations such as point cloud data transmission, encoding/decoding, and rendering, thereby providing point cloud content such that real-time processing, low latency, and parallel processing may be implemented.

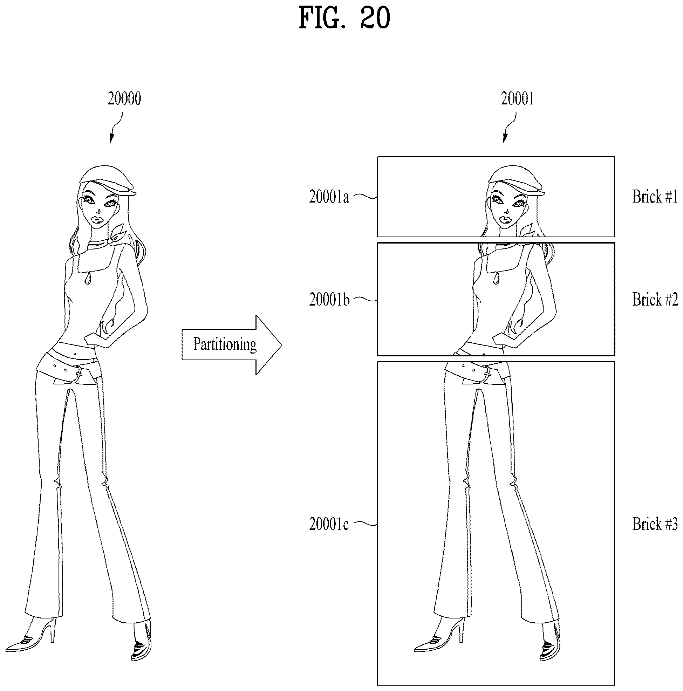

FIG. 20 illustrates a method of partitioning point cloud data into one or more regions by a point cloud data encoder according to embodiments.

The point cloud data encoder according to the embodiments may receive point cloud data and partition the point cloud data into one or more bricks. For example, the spatial partitioner 18001 of FIG. 18 and the brick tiling unit 19001 of FIG. 19 may partition the point cloud data into one or more bricks or regions.

The image 20000 in the left part of FIG. 20 represents point cloud data according to embodiments. The point cloud data may be partitioned into a plurality of types of point cloud data (e.g., LiDAR data, etc.). The types of point cloud data may be classified according to whether the points of the point cloud data are densely distributed or sparsely distributed.

The image 20001 in the right part of FIG. 20 represents an operation of partitioning the point cloud data of the left image 20000 of FIG. 20 into three bricks. The operation of partitioning the point cloud data into three bricks may be performed by the spatial partitioner 18001 of FIG. 18 and the brick tiling unit 19001 of FIG. 19.

Referring to the right image 20001 of FIG. 20, the brick tiling unit 19001 may partition the point cloud data of the left image 20000 of FIG. 20 into a first brick20001a, a second brick20001b, and a third brick20001c. The brick tiling unit 19001 may partition the point cloud data based on the type of the point cloud data. The brick according to the embodiments may be called by other names within the scope of equivalent meaning.

The method for partitioning according to the embodiments may include a first method for dividing based on the density of points of the point cloud data, a second method for dividing into one or more sectors determined based on centroid point information and radius information, a third method for dividing into one or more layers, a fourth method for dividing into one or more spherical regions, a fifth method for dividing based on the attribute information about points in the point cloud data, or a sixth method for dividing based on lengths of axes of a 3D space including the point cloud data.

The point cloud data transmission device according to the embodiments may partition the point cloud data into tiles, slices, and/or bricks, as described with reference to FIGS. 18 and 19, thereby enabling random access and parallel coding in the 3D space occupied by the point cloud data.

FIG. 21 illustrates a method of partitioning point cloud data into one or more regions by a point cloud data encoder according to embodiments.

FIG. 21-(A) shows a 3D space 21A00 occupied by the point cloud data. The point cloud data encoder according to the embodiments may encode the point cloud data. The point cloud data encoder may partition the points or the 3D space 21A00 into one or more partitioned regions 21A02, and independently encode the points included in the partitioned regions.

The 3D space 21A00 occupied by point cloud data includes the point cloud data according to embodiments. The 3D space 21A00 includes a plurality of points 21A01 representing the point cloud data.

The plurality of points 21A01 may be a unit constituting the point cloud data according to the embodiments. The point cloud data encoder may encode position information and attribute information about each of the points 21A01.

The partitioned regions 21A02 may include some of the points 21A01 of the point cloud data. The point cloud data encoder may partition the point cloud data into one or more partitioned regions 21A02 based on the characteristic of the point cloud data. The partitioned regions 21A02 may correspond to tiles, slices, bricks, or blocks.

The characteristic of the point cloud data may be related to the density of the points 21A01. For example, the point cloud data may be data having points densely distributed in the direction of an arrow 21A03. Accordingly, the point cloud data encoder may partition the point cloud data into one or more partitioned regions 21A02 based on the density of the points.

For example, the point cloud data encoder may partition the point cloud data into partitioned regions 21A02 including a first brick 21A02-1 and a second brick 21A02-2. The first brick 21A02-1 may be a region containing relatively sparsely distributed points among the plurality of points. The second brick 21A02-2 may be a region containing points relatively densely distributed among the plurality of points. According to embodiments, the second brick 21A02-2 in which the points are densely distributed may be larger than the first brick 21A02-1 in which the points are sparsely distributed.

FIG. 21-(B) illustrates a method of partitioning the 3D space 21A00 occupied by the point cloud data into one or more regions and a process of encoding each of the bricks. Specifically, FIG. 21-(B) illustrates partitioning the point cloud data into one or more bricks based on the density of the points of the point cloud data. This partitioning method for the point cloud data may be referred to as point density-based brick tiling.

The point density-based brick tiling according to the embodiments means partitioning the point cloud data into one or more bricks according to the density of points or the distance of the points. According to embodiments, a partitioned brick may be composed of one 3D block or a bundle of two or more 3D blocks.

The operation of FIG. 21-(B) may be performed by the spatial partitioner 18001 of FIG. 18 and the brick tiling unit 19001 of FIG. 19. The process illustrated in FIG. 21-(B) may include receiving point cloud data (21B00), determining whether to perform brick partitioning (21B01), determining the number of bricks (21B02), and calculating a density of points (21B03), determining a quantization coefficient according to the density of points for each of the bricks (21B04), performing encoding on each brick (21B05) and/or outputting a bitstream for each brick (21B06).

In operation 21B00 of receiving point cloud data, the point cloud data according to the embodiments may be received.

In operation 21B01 of determining whether to perform brick partitioning, whether to partition the received point cloud data into one or more bricks (or slices or tiles) may be determined.

In operation 21B01 of determining whether to perform brick partitioning, whether to perform brick partitioning may be determined based on x coordinate values, y coordinate values, and/or z coordinate values of the points in the received point cloud data.

In operation 21B01 of determining whether to perform brick partitioning, whether to perform brick partitioning may be determined based on the type of the received point cloud data. Operation 21B01 of determining whether to perform brick partitioning may be an operation of generating brick tiling filter information indicating whether to perform the brick partitioning.

When it is determined that the brick partitioning is performed in the operation of determining whether to perform the brick partitioning, the number of bricks into which the point cloud data is to be partitioned is determined in operation 21B02 of determining the number of bricks. In operation 21B02 of determining the number of bricks, the number of bricks into which the data is to be partitioned may be determined based on the type of the received point cloud data.

In operation 21B03 of calculating the density of the points, the density of the points may be calculated and the point cloud data may be partitioned into one or more bricks based on the calculated density. According to embodiments, the density of points may be defined based on the number of points per volume occupied by the points or an average of distances between points. According to embodiments, the density of points per brick may be variably determined.

In operation 21B04 of determining a quantization coefficient according to the density of points for each brick, the point cloud data encoder according to the embodiments may determine a quantization coefficient according to the density in order to variably perform decoding according to the density of the points.

Operation 21B05 of performing encoding on each brick refers to an operation of encoding the point cloud data for each brick by the point cloud data encoder. According to embodiments, each of the partitioned bricks may be flexibly changed according to the setting of the point cloud data encoder. The point cloud data encoder may generate information such as information for providing partitioning information (e.g., brick_unit_information, brick density_quantization_step).

**EP 3 992 911 A1**

Operation 20B06 of outputting a bitstream for each brick refers to an operation of outputting an output bitstream by the point cloud data transmission device after encoding the point cloud data on a brick-by-brick basis.

The point cloud data transmission device according to the embodiments may perform the point density-based tiling, thereby effectively encoding a sequence of a frame in which the distribution density of points changes among the regions.

The point cloud data transmission device may provide a reduced scaling factor for a brick having a low density according to the density of points by performing the point density-based tiling, thereby increasing the compression rate of the geometry information. For a brick containing densely distributed points, an increased scaling factor may be provided. Thereby, position information may be accurately presented.

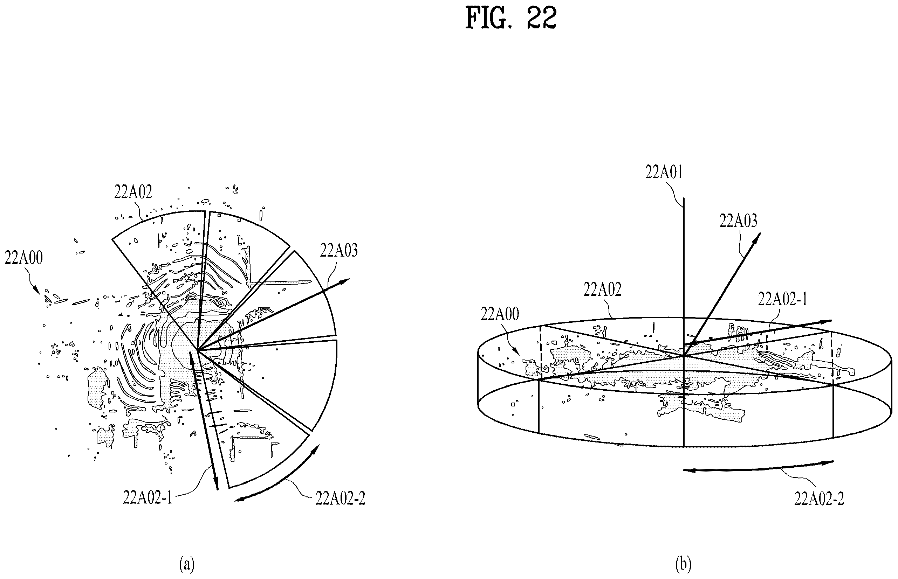

FIG. 22 illustrates a method of partitioning point cloud data into one or more regions by a point cloud data encoder according to embodiments.

FIG. 22 shows that the point cloud data encoder partitions a 3D space occupied by point cloud data or the point cloud data 22A00 into one or more circular sectors 22A02. The point cloud data encoder may encode the point cloud data for each of the partitioned circular sectors 22A02. The operation of partitioning the point cloud data illustrated in FIG. 22 may be performed by the spatial partitioner 18001 of FIG. 18 and the brick tiling unit 19001 of FIG. 19.

The sector 22A02 may correspond to a tile, a slice, a brick, or a block according to the embodiments.

The point cloud data encoder may partition the point cloud data 22A00 into one or more circular sectors 22A02 based on a reference axis 22A01. The operation of partitioning the point cloud data into one or more circular sector-shaped bricks may be referred to as circular sector brick tiling.

The point cloud data 22A00 represents point cloud data acquired by the point cloud data encoder. The point cloud data 22A00 includes a plurality of points.

The reference axis 22A01 refers to an axis serving as a reference for partitioning the point cloud data into one or more circular sectors 22A02. The reference axis 22A01 may represent the center of the 3D space (e.g., bounding box) occupied by the point cloud data. For example, the reference axis may be an axis that extends through the center of the x-axis and y-axis of the 3D space and is perpendicular to the x-y plane. For example, the reference axis may be an axis that extends through the center of the y-axis and z-axis of the 3D space and is perpendicular to the y-z plane. For example, the reference axis may be an axis that extends through the center of the x-axis and z-axis of the 3D space and is perpendicular to the x-z plane.

According to embodiments, the point cloud data may be partitioned into one or more circular sectors based on the reference axis 22A01 including the origin of the circular sectors. According to embodiments, when one or more circular sectors are determined, each unit may include points including position information or attribute information.

The reference axis 22A01 according to the embodiments may be determined based on information representing the centroid point information. The centroid point information may be, for example, central node xyz. The reference axis 22A01 may be determined as the shortest axis that extends through the centroid point information among the x-axis, y-axis, and z-axis of the 3D space.

The circular sector 22A02 means a brick into which the point cloud data is partitioned. The circular sector 22A02 contains points. The circular sector 22A00 may represent an arc-shaped region radiating about the reference axis by a central angle 22A02-1.

According to embodiments, each of the partitioned circular sectors 22A02 may have the same or different radii 22A02-1. The radius 22A02-1 of the circular sector 22A02 may be determined based on the density of the point cloud data. The radius 22A02-1 may be indicated by bounding box radius.

The point cloud data encoder according to the embodiments may partition the point cloud data into circular sectors 22A02 having various central angles 22A02-2. The point cloud data encoder may determine the central angle of each circular sector. The central angles of the circular sectors may be determined based on the density of the point cloud data.

When the point cloud data is composed of a plurality of frames, the point cloud data encoder according to the embodiments may determine the shape of the partitioned regions based on a direction 22A03 of movement of an object contained in the point cloud data. When the point cloud data is composed of a plurality of frames, the movement direction of the object contained in the point cloud data (e.g., the direction pointed by a blue arrow) may be defined. The movement direction of the object may be indicated by moving_direction_vector.

Information about the bounding box (3D space occupied by the point cloud data) may be defined for each frame, or may be determined by coordinate information (e.g., x, y, and z information) about each frame. According to embodiments, when information about the identical bounding box is applied to all frames, use_identical_bounding box information _flag may be transmitted.

According to embodiments, the point cloud data encoder may perform encoding on each frame differently using a different quantization coefficient, a different geometry compression technique, a different attribute compression technique, and single/multiple attributes.

The point cloud data encoder according to the embodiments may effectively encode a data sequence including a plurality of frames, such as LiDAR data or data for self-driving, by performing circular sector brick tiling.

The point cloud data transmission device according to the embodiments may signal a brick with only radius information and angle information about the brick by performing circular sector brick tiling, thereby reducing complexity of the reception device. In addition, by performing circular sector brick tiling, encoding through prediction of position information may be improved when the same distribution of points is given in the same circular sector.

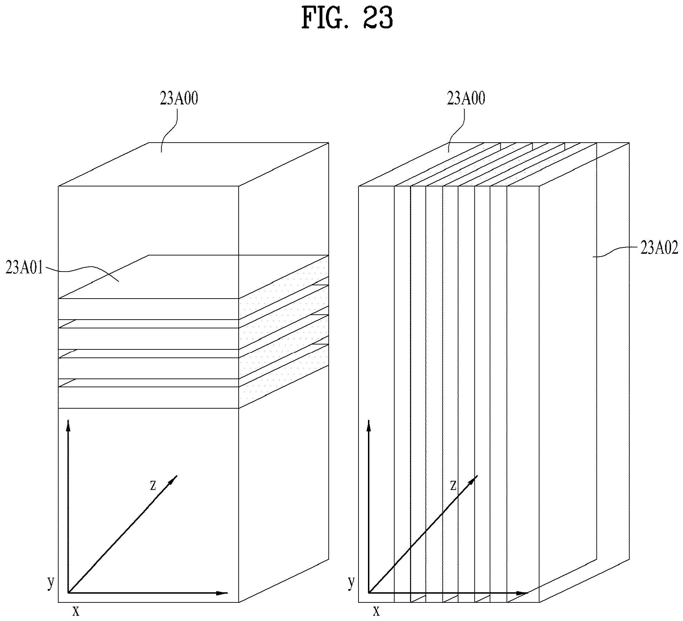

FIG. 23 illustrates a method of partitioning point cloud data into one or more regions by a point cloud data encoder according to embodiments.

FIG. 23 illustrates that the point cloud data encoder partitions a 3D space occupied by the point cloud data or the point cloud data 23A00 into one or more layers 23A01 or 23A02. The point cloud data encoder may encode the point cloud data for each partitioned layer 23A02. The operation of partitioning the point cloud data illustrated in FIG. 23 may be performed by the spatial partitioner 18001 of FIG. 18 or the brick tiling unit 19001 of FIG. 19.

The point cloud data encoder may partition the point cloud data 23A00 into one or more layers 23A01. The method of partitioning the point cloud data into one or more layers 23A01 according to the embodiments may be referred to as layer brick tiling.

The layers 23A01 may correspond to tiles, slices, bricks, or blocks according to the embodiments.

The point cloud data encoder may sort the point cloud data before partitioning the point cloud data into one or more layers. The point cloud data encoder may sort the point cloud data in ascending order, descending order, or Morton code order. The operation of sorting the point cloud data may be performed by the spatial partitioner 18001 of FIG. 18, the brick tiling unit 19001 of FIG. 19, or the data characteristic checker 19000 of FIG. 19. The point cloud data encoder may generate information (e.g., enable _sorting flag) indicating the method of sorting the point cloud data, and transmit the information in the form of a bitstream.

The layer 23A01, 23A02 may represent a set of point cloud data included in a predetermined range along the x-axis, y-axis, or z-axis of the 3D space occupied by the point cloud data. That is, the layer 23A01, 23A02 may be configured as a set of points.

The layer 23A01 shown the left in FIG. 23 may represent a set of points of all point cloud data having y-coordinate information in a specific range. Accordingly, according to embodiments, the point cloud data may be composed of a plurality of layers in a range of y-coordinate information about the points. The layers shown on the left in FIG. 23 may be referred to as x-z layers (or y-direction layers).

The layer 23A02 shown on the right in FIG. 23 may represent a set of points of all point cloud data having x-coordinate information in a specific range. Accordingly, according to embodiments, the point cloud data may be composed of a plurality of layers in a range of x-coordinate information about the points. The layers shown on the right in FIG. 23 may be referred to as y-z layers (or x-direction layers).

Similarly, the point cloud data may be composed of a plurality of layers in a range of z-coordinate information about the points. The layers shown on the left in FIG. 23 may be referred to as x-y layers (or z-direction layers). According to embodiments, the point cloud data may be partitioned into one or more x-direction layers, y-direction layers, or z-direction layers.

Point cloud data according to embodiments may be composed of a plurality of layers formed based on the temporal movement of the points.

The point cloud data encoder according to the embodiments may perform progressive coding on one or more layers. The progressive coding may mean progressively performing encoding on each sorted layer.

The point cloud data transmission device according to the embodiments may partition the point cloud data into one or more layers. Thus, when point cloud data in one frame cluster in a specific region (e.g., attribute information values consecutively clustering on the left, right, top, bottom, front, or back), compression may be effectively applied according to the data characteristic.

By partitioning the point cloud data into one or more layers, the point cloud data transmission device may improve the degree of association of position information in a brick, thereby increasing encoding efficiency.

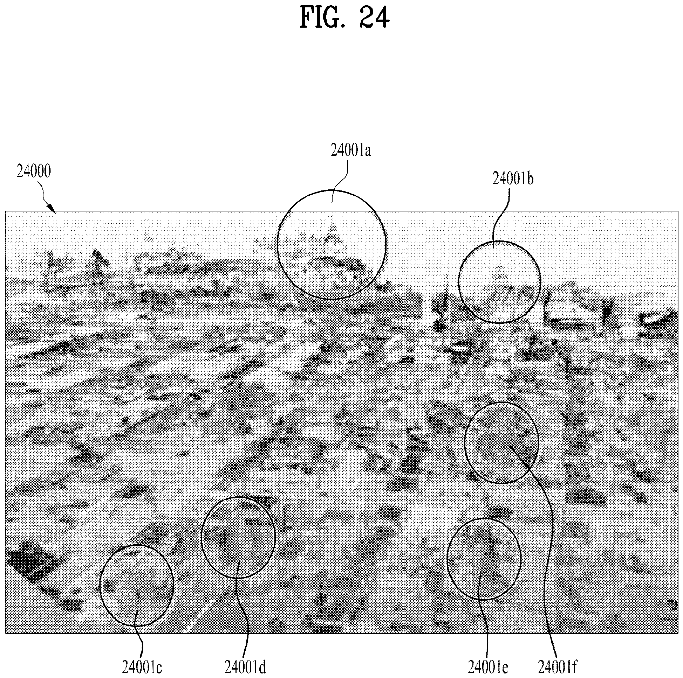

FIG. 24 illustrates a method of partitioning point cloud data into one or more regions by a point cloud data encoder according to embodiments.

FIG. 24 illustrates that the point cloud data encoder partitions a 3D space occupied by point cloud data or the point cloud data 24A00 into one or more spherical/oval regions 24001a to 24001f. The point cloud data encoder may encode the point cloud data for each of the one or more spherical/oval regions 24001a to 24001f. The operation of partitioning the point cloud data illustrated in FIG. 24 may be performed by the spatial partitioner 18001 of FIG. 18 or the brick tiling unit 19001 of FIG. 19.

In embodiments, the spherical/oval regions 24001a to 24001f may correspond to tiles, slices, bricks, or blocks.

The point cloud data encoder according to the embodiments may accurately encode points positioned in an important region in the point cloud data 24000 or perform encoding less accurately on an unimportant portion. For example, when the point cloud data 24000 represents a specific city as shown in FIG. 24, there may be a portion to be accurately encoded in the encoding process of the point cloud data encoder. For example, the regions 24001a to 24001f marked with a circle or an ellipse in FIG. 24 may be portions to be accurately encoded in the encoding process. In particular, when the amount of the point cloud data is large, but the region to be accurately encoded is specified as a specific region, encoding the entire point cloud data cause latency in the transmission/reception process.

Accordingly, in order to efficiently encode the point cloud data, the point cloud data encoder according to the embodiments may partition the point cloud data 2400 into one or more spherical regions (or oval regions) 24001a to 24001f, and perform encoding on the partitioned spherical regions 24001a to 24001f.

The point cloud data 24000 may contain one or more points. The point cloud data 24000 may contain one or more regions which are to be encoded using a specific method (or regions that need to be accurately encoded in performing encoding, etc.). The regions to be encoded using the specific method may be formed in a circular (or spherical) shape as shown in 24001a and 24001b of FIG. 24, or an oval shape (or a distorted sphere shape) as shown in 24001c to 24001f of FIG. 24. A region formed in a circular (or spherical) shape may be referred to as a spherical region (or circular brick). A region formed in an oval shape (or a distorted sphere shape) may be referred to as an oval region (or an ellipsoidal region).

The method of partitioning point cloud data into one or more spherical or oval regions may be referred to as spherical/oval region tiling.

According to embodiments, when point cloud data is presented based on a spherical coordinate system or a geographic coordinate system, the point cloud data may be partitioned into spherical regions. According to embodiments, various coordinate systems (such as a cylindrical coordinate system) may be used according to the shape of the brick.

The point cloud data encoder according to the embodiments may partition the point cloud data into one or more spherical regions 24001a and 24001b or oval regions 24001c to 24001f. The point cloud data encoder may generate sphere_or_oval flag indicating whether the bricks of the point cloud data are spherical regions or oval regions, and transmit the same in a bitstream.

The point cloud data encoder may generate information about each of the spherical regions and/or the oval regions, and transmit the information in a bitstream. For example, the point cloud data may contain information related to the shape of each of the spherical regions or the oval regions.

The spherical regions 24001a and 24001b may represent bricks configured in a spherical shape. The spherical regions 24001a and 24001b may refer to sets of points of point cloud data in the circular or spherical regions in a bounding box. The point cloud data encoder may generate center point information (e.g., center_point_xyz) and radius information (radius_distance) about each of the spherical regions 24001a and 24001b, and transmit the same in the form of a bitstream for each brick.

The oval regions 24001c to 24001f may represent bricks configured in an oval shape or a prolate shape. The oval regions 24001c to 24001f may refer to sets of points of point cloud data in the circular or spherical regions in the bounding box. The point cloud data encoder may generate center point information (e.g., center_point_xyz), radius information (radius _distance), and azimuth angle information (azimuth_angle) about each of the oval regions 24001c to 24001f, and transmit the same in the form of a bitstream for each brick.

The point cloud data transmission device according to the embodiments may use spherical/oval region tiling, thereby effectively performing encoding in a sequence in which a portion of the data having an object present in a space and a portion having no object are clearly identified.

The point cloud data transmission device according to the embodiments may provide a high compression rate for data having position information distributed in a circular shape, such as a VP-tree, by performing spherical/oval region tiling.

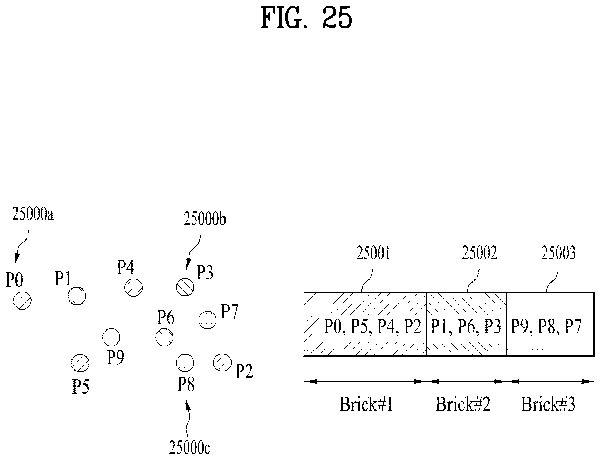

FIG. 25 illustrates a method of partitioning point cloud data into one or more regions by a point cloud data encoder according to embodiments.

FIG. 25 illustrates that the point cloud data encoder partitions or point cloud data 25000 or a 3D space occupied by the point cloud data into attribute-based regions 25001 to 25003. The point cloud data encoder may encode the point cloud data for each of one or more attribute-based regions 25001 to 25003. The operation of partitioning the point cloud data illustrated in FIG. 25 may be performed by the spatial partitioner 18001 of FIG. 18 or the brick tiling unit 19001 of FIG. 19.

The point cloud data encoder may partition the point cloud data based on attribute information about the points in the point cloud data 25000. For example, the point cloud data encoder may configure one or more regions according to attributes (color, reflectance, transparency, time information, object index, etc.) constituting the point cloud data. According to embodiments, the method of partitioning regions based on the attribute information may be referred to as attribute-based region tiling (e.g., attribute-based brick tiling).

The left part of FIG. 25 shows a plurality of points 25000a to 25000c in a bounding box. The plurality of points may include, for example, points P0, P2, P4, and P5 of a red color, points P7, P8, and P9 of a blue color, and points P1, P3, and P6 of a green color. The point cloud data encoder according to the embodiments may partition the data into one or more regions (e.g., bricks) according to the colors of the points.

The right part of FIG. 25 illustrates that a plurality of points 25000a to 25000c is partitioned into three bricks 25001, 25002, and 25003. For example, the points P0, P2, P4, and P5 having the red color may be divided into a first brick 25001, and the points P7, P8, P9 having the blue color may be divided into a second brick 25002, and the points P1, P3, and P6 having the green color may be divided into a third brick 25003.

The point cloud data encoder according to the embodiments may check attribute information about the plurality of points before partitioning the plurality of points into one or more regions based on the attribute information. The operation of checking the attribute information about the plurality of points may be performed by the data characteristic checker 19000 of FIG. 19. For example, in the point cloud data according to the embodiments, points of the red color may be checked among the points. For example, the operation of checking the points of the red color may be performed based on the values of RGB information about the points.

The point cloud data transmission device (encoder) according to the embodiments may transmit, in the form of a bitstream, information indicating whether the attribute-based region tiling according to the embodiments has been performed on the point cloud data. In addition, when the attribute-based region tiling has been performed, the point cloud data transmission device (encoder) may transmit referenced_attribute_type, which is a reference for partitioning, in the form of a bitstream. The reference for partitioning may include a plurality of attribute types. The reference may be referenced_attribute type range or referenced_attribute_type_value.

The point cloud data encoder according to the embodiments may employ the attribute-based region tiling. Thereby, encoding may be effectively performed in a sequence including one attribute information value or multiple pieces of geometry information corresponding to similar values.

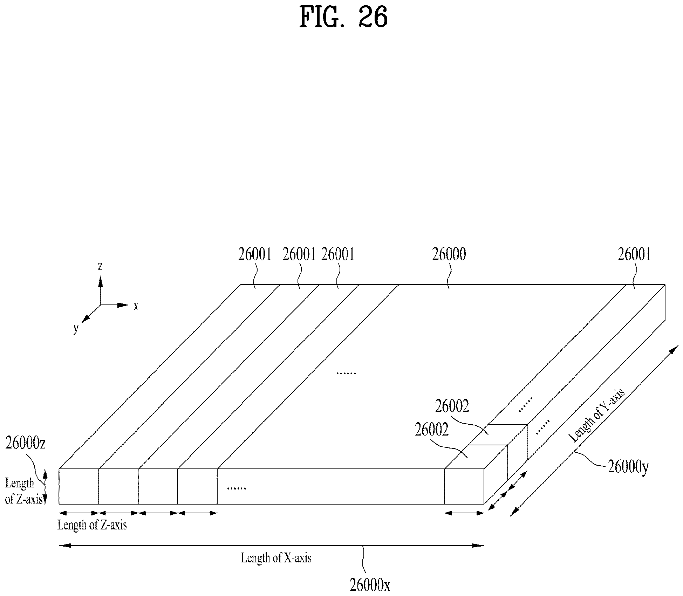

FIG. 26 illustrates a method of partitioning point cloud data into one or more regions by a point cloud data encoder according to embodiments.

FIG. 26 illustrates that the point cloud data encoder partitions point cloud data 26000 or a 3D space occupied by the point cloud data into regions 26001 and 26002 based on the lengths of the axes of the bounding box. The point cloud data encoder may encode the point cloud data for each of the partitioned regions 26001 and 26002 based on one or more of the lengths of the axes of the bounding box. The operation of partitioning the point cloud data illustrated in FIG. 26 may be performed by the spatial partitioner 18001 of FIG. 18 or the brick tiling unit 19001 of FIG. 19. According to embodiments, the operation of partitioning the data into the partitioned regions (e.g., bricks) 26001 and 26002 based on the lengths of the axes of the bounding box may be referred to as adaptive axial length-based region tiling (or adaptive axial length-based brick tiling).

The point cloud data 26000 may include one or more points. The point cloud data may be included in a 3D space (e.g., a bounding box). The 3D space (e.g., bounding box) may be represented as an x-axis, a y-axis, and a z-axis.

For the point cloud data 26000, for example, the length of one of the x-axis, y-axis and z-axis may be shorter or significantly shorter than the lengths of the other two axes. For example, there may be point cloud data that expresses a terrain that is widely distributed along two axes except one axis. If the point cloud data transmission device performs encoding on the points in the bounding box regardless of the lengths of the axes, encoding efficiency may be degraded. Accordingly, the point cloud data transmission device needs to partition the data into one or more regions in adaptation to the lengths of the axes of the 3D space. Therefore, the point cloud data transmission device may calculate the relative lengths of the x-axis, y-axis, and z-axis, and partition the point cloud data into one or more regions based on the calculated relative lengths.

The point cloud data transmission device (e.g., the tile partitioner 18000 of FIG. 18 or the tiling unit 19001 of FIG. 19) may configure one or more slices (or first bricks) 26001 by partitioning the longest axis (e.g., the x-axis) among the a length of an x-axis 26000x, a length of a y-axis 26000y, and a length of the z-axis 26000z into units of the length of the shortest axis (e.g., the z-axis). The data partitioned into the one or more slices (or first bricks) may be units that may be encoded and decoded in parallel.

The point cloud data transmission device (e.g., the tile partitioner 18000 of FIG. 18 or the tiling unit 19001 of FIG. 19) may re-partition some bricks 26001 among the first bricks. In the re-partitioning according to the embodiments, for some of the first bricks, one or more sub-slices (or second bricks) 26002 may be configured by dividing the axis of the longest length (i.e., the y-axis 26000y in the case of the brick 26001 of FIG. 26) into units of the length of the shortest axis (e.g., the x-axis or the z-axis). The data partitioned into the one or more sub-slices (or second bricks) 26002 may be units that may be encoded and decoded in parallel.

The point cloud data transmission device according to the embodiments may perform partitioning based on min/max information about the points without conforming to a spatial data distribution with a maximum number and a minimum number (maxPointNum, minPointNum) of points in the first bricks.

The point cloud data transmission device according to the embodiments may determine whether to re-partition the first bricks or the second bricks, based on the number of points in the regions, the size of the space allocated to each of the regions, and the density of points included in the regions. According to embodiments, spatial re-partitioning may be space-adaptively performed, and may include partitioning slices based on a specific axis and re-partitioning slices based on a middle-length axis.

Accordingly, in a method of transmitting point cloud data according to embodiments, the point cloud data may be partitioned based on a first dividing step for dividing a first axis of the 3D space by a length unit of a second axis, and/or a second dividing step for dividing a third axis of the 3D space by the length unit of the second axis.

By employing the adaptive axial length-based region tiling, the point cloud data transmission device according to the embodiments may effectively perform encoding in a sequence associated with a spatial unit within one frame of point cloud data including a large terrain feature. The point cloud data reception device according to the embodiments may effectively decode the point cloud data including the large terrain feature.

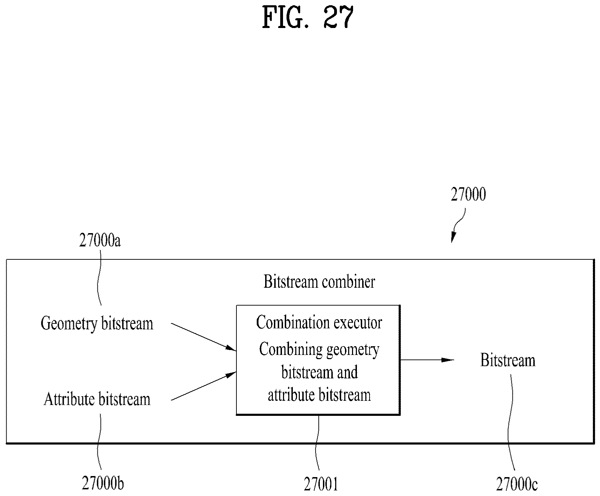

FIG. 27 illustrates a bitstream combiner of a point cloud data transmission device according to embodiments.

A bitstream combiner 27000 will be described below. The bitstream combiner 27000 receives a geometry bitstream 27000a and/or an attribute bitstream 27000b. The bitstream combiner 27000 may output a bitstream 27000c by combining the received geometry bitstream 27000a and the received attribute bitstream 27000b.

The bitstream combiner 27000 may receive the geometry bitstream 27000a, which is encoded on a region-by-region basis, and the attribute bitstream 27000b, which is encoded on a region-by-region basis, and combine the bitstreams. The bitstream combiner 27000 may output the bitstream 27000c in units of regions. According to embodiments, the bitstream combiner 27000 may receive and combine the bitstreams 27000a and 27000b in which the point cloud data corresponding to one or more regions partitioned according to FIGS. 19 to 26 are encoded. Accordingly, the bitstream combiner 27000 may output the bitstream 27000c in units of regions according to FIGS. 19 to 26.

The bitstream combiner 27000 may refer to the bitstream combiner 19014 of FIG. 19. The geometry bitstream 27000a and the attribute bitstream 27000b may refer to the geometry bitstream and attribute bitstream of FIG. 19. The geometry bitstream 27000a and the attribute bitstream 27000b may refer to the geometry bitstream 1800b and attribute information bitstream 18000c of FIG. 18.

The bitstream combiner 27000 may include a combination executor 27001 configured to combine the geometry bitstream 27000a and the attribute bitstream 27000b. The combination executor 27001 may receive the geometry bitstream 27000a and the attribute bitstream 27000b described above, combine the bitstreams for each region, and output the bitstream 27000c.

The bitstream combiner 27000 may determine an order of combining the geometry bitstream 27000a and the attribute bitstream 27000b and a method for the combining. The method for the combining may be include at least one of methods such as multiplexing, MVC bit string combination, sequential combination, and importance-based combination. The method for the combining may be determined or selected according to the characteristics of the received geometry bitstream 27000a and/or the attribute bitstream 27000b (e.g., various attribute bitstreams, presence/absence of an attribute bitstream, the degree of quantization of the geometry and attribute bitstreams, the length of the bitstream, tiling, etc.). The point cloud data encoder may generate information (combining_filter_index) representing the combining method used for the encoder to transmit the combined geometry bitstream and attribute bitstream, and transmit the same in the form of a bitstream. According to embodiments, a specific combining method may be fixedly used according to the transmission characteristic of the bitstream.

Accordingly, the method of transmitting point cloud data according to the embodiments may further include combining the encoded geometry information and the encoded attribute information for each of one or more regions.

As the bitstream combiner 27000 is configured, the point cloud data transmission device may transmit the bitstream generated by encoding the partitioned regions according to FIGS. 19 to 26. Accordingly, the point cloud data reception device according to the embodiments may efficiently decode the point cloud data received for each region along with the signaling information.

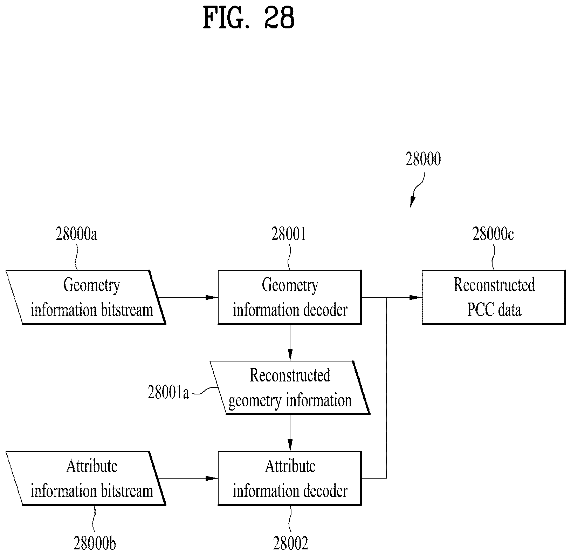

FIG. 28 illustrates a point cloud decoder according to embodiments.

A point cloud decoder 28000 according to the embodiments may include a geometry information decoder 28001 and/or an attribute information decoder 28002. According to embodiments, the point cloud decoder may be referred to as a PCC decoding device, a PCC decoding unit, a point cloud device, a point cloud decoding unit, a PCC decoder, or the like.

The geometry information decoder 28001 receives a geometry information bitstream 28000a of point cloud data. The geometry information decoder 28001 may decode the geometry information bitstream 28000a of the point cloud data and output attribute information about the reconstructed point cloud data 28000c. The geometry information decoder 28001 may reconstruct geometry information from the geometry information bitstream and output the reconstructed geometry information 28001. The geometry information bitstream 28000a may represent the geometry information bitstream or geometry bitstream of FIGS. 18 to 26. The attribute information bitstream 28000b may represent the attribute information bitstream or attribute bitstream of FIGS. 18 to 26.

The geometry information decoder 28001 reconstructs the geometry information by decoding the received geometry information bitstream. The reconstructed geometry information may be input to the attribute information decoder. The attribute information decoder 28002 reconstructs the attribute information from the attribute information bitstream input thereto and the reconstructed geometry information received from the geometry information decoder. The reconstructed geometry information may be the geometry reconstructed by the geometry reconstructor (Reconstruct geometry) 11003 described with reference to FIG. 11. The reconstructed geometry information may be an octree occupancy code reconstructed by the occupancy code-based octree reconstruction processor 13003 described with reference to FIG. 13.

The geometry information decoder 28001 receives the geometry information bitstream received by the reception device according to the embodiments. The geometry information decoder 28001 may decode the geometry information bitstream.

The geometry information decoder 28001 may perform all/part of the operations of the point cloud video decoder of FIG. 1, the decoding 20003 of FIG. 2, the geometry decoder of FIG. 10, the arithmetic decoder 11000 of FIG. 11, the octree synthesizer 11001 of FIG. 11, the surface approximation synthesizer 11002 of FIG. 11, the geometry reconstructor 11003 of FIG. 11, and/or the coordinate inverse transformer 11004 of FIG. 11.

The attribute information decoder 28002 receives the attribute information bitstream 28000b of the point cloud data. The attribute information decoder 28002 may decode the attribute information bitstream 28000b of the point cloud data and output attribute information about the reconstructed point cloud data 28000c. The attribute information decoder 28002 may decode the attribute information bitstream based on the reconstructed geometry information 28001a generated by the geometry information decoder 28001.

The attribute information decoder 28002 receives the attribute information bitstream received by the reception device according to the embodiments. The attribute information decoder may decode the attribute information in the attribute information bitstream based on the reconstructed geometry information. The geometry information and/or attribute information included in the point cloud data may be PCC data reconstructed through decoding.

The attribute information decoder 28002 may perform all/part of the operation of the point cloud video decoder of FIG. 1, the operation of the decoding 20003 of FIG. 2, the operation of the attribute decoder of FIG. 10, the operations of the inverse quantizer 11006, the RAHT 11007, the LOD generator 11008, the inverse lifter 11009, and/or the color inverse transformer 11010 of FIG. 11, and the operations of the arithmetic decoder 13007, the inverse quantization processor 13008, the prediction/lifting/RAHT inverse transform processor 13009, the color inverse transform processor 13010, and/or the renderer 13011 of FIG. 13.

Accordingly, a method of receiving point cloud data according to embodiments may include receiving a bitstream including point cloud data and signaling information, decoding the point cloud data, and/or rendering the point cloud data. The received point cloud data may include a geometry bitstream and an attribute bitstream. The decoding of the point cloud data may include geometry-decoding the geometry bitstream of the point cloud data and/or attribute-decoding the attribute bitstream of the point cloud data based on reconstructed geometry information. When the received point cloud data is divided into one or more regions, the regions may be independently decoded in the decoding operation.

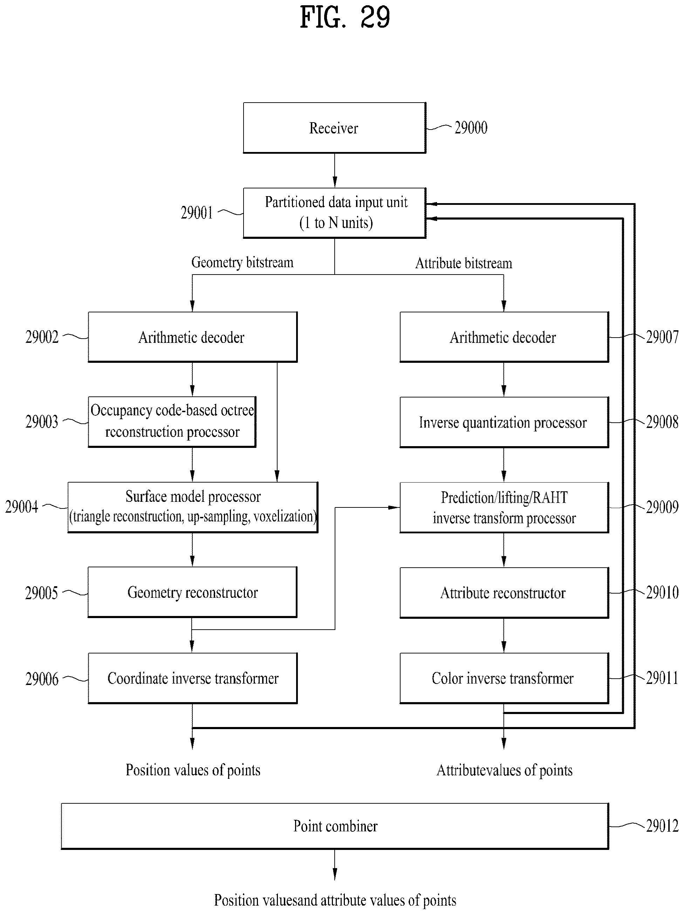

FIG. 29 illustrates a point cloud decoder according to embodiments.

The point cloud decoder according to the embodiments of FIG. 29 may be the point cloud data decoder 28000 of FIG. 28. The point cloud decoder may include a receiver 29000, a partitioned data input unit 29001, a first arithmetic decoder 29002, an occupancy code-based octree reconstruction processor 29003, a surface model processor 29004, a geometry reconstructor 29005, a coordinate inverse transformer 29006, a second arithmetic decoder 29007, an inverse quantization processor 29008, a prediction/lifting/RAHT inverse transform processor 29009, an attribute reconstructor 29010, a color inverse transformer 29011, and/or a point combiner 29012.

The operations of the components of the point cloud data decoder shown in FIG. 29 may be performed on a brick-by-brick basis or may be independently performed on a brick-by-brick basis.

The receiver 29000 may receive a bitstream including point cloud data according to embodiments. The receiver 29000 may transmit the received bitstream to the partitioned data input unit 29001. The receiver 29000 may perform the operations of the receiver 10007 of FIG. 1, the transmission 20002 of FIG. 2, and the receiver 13000 of FIG. 13.

The partitioned data input unit 29001 receives the bitstream including the point cloud data on a brick-by-brick basis, and outputs a geometry bitstream and an attribute bitstream of the point cloud data on the brick-by-brick basis to perform decoding on the brick-by-brick basis. The partitioned data input unit 29001 may transmit the geometry bitstream in a brick unit to the first arithmetic decoder 29002 and transmit the attribute bitstream in a brick unit to the second arithmetic decoder 29002.

When the bitstream received by the receiver 29000 contains signaling information (e.g., bistream_brick_decoding_flag) indicating that the encoding has been performed on the brick-by-brick basis, the point cloud data reception device (the partitioned data input unit 29001) may decode the received bitstream N times. The partitioned data input unit 29001 may perform the operations of the receiver 10007 of FIG. 1, the transmission 20002 of FIG. 2, and the reception processor 13001 of FIG. 13.

The first arithmetic decoder 29002 receives the geometry bitstream on the brick-by-brick basis. The first arithmetic decoder 29002 may decode the geometry bitstream. The first arithmetic decoder 29002 outputs the decoded geometry information.

The first arithmetic decoder 29002 may perform the operations of the point cloud video decoder 10006 of FIG. 1, the decoding 20003 of FIG. 2, the arithmetic decoder 11000 of FIG. 11, and the arithmetic decoder 13002 of FIG. 13.

The occupancy code-based octree reconstruction processor 29003 receives the decoded geometry information.

The occupancy code-based octree reconstruction processor 29003 may reconstruct an occupancy-based octree based on the geometry bitstream in a brick unit. The occupancy code-based octree reconstruction processor 29003 may transmit the reconstructed octree to the surface model processor 29004.

The occupancy code-based octree reconstruction processor 29003 may perform the operations of the point cloud video decoder 10006 of FIG. 1, the decoding 20003 of FIG. 2, the octree analyzer 11001 of FIG. 11, and/or the occupancy code-based octree reconstruction processor 13003 of FIG. 13.

The surface model processor 29004 may perform surface model processing on the geometry information based on the geometry information decoded by the first arithmetic decoder 29002 and/or the octree reconstructed by the occupancy code-based octree reconstruction processor 29003. The surface model processing of the geometry information may include, for example, triangle reconstruction, up-sampling, and voxelization.

The surface model processor 29004 may perform the operations of the point cloud video decoder 10006 of FIG. 1, the decoding 20003 of FIG. 2, the surface approximation analyzer 11002 of FIG. 11, and/or the surface model processor 13004 of FIG. 13.

The geometry reconstructor 29005 receives the geometry information processed by the surface model processor 29004. The geometry reconstructor reconstructs the surface model-processed geometry information. The geometry reconstructor 29005 may transmit the reconstructed geometry information to the prediction/lifting/RAHT inverse transform processor 29009 and/or the coordinate inverse transformer 29006.

The geometry reconstructor 29005 may perform the operations of the point cloud video decoder 10006 of FIG. 1, the decoding 20003 of FIG. 2, and/or the geometry reconstructor 11003 of FIG. 11.

The coordinate inverse transformer 29006 inversely transforms the coordinate information about the geometry information generated by the geometry reconstructor 29005. The coordinate inverse transformer 29006 inversely transforms the geometry information and outputs position information about the points of the point cloud data. The coordinate inverse transformer 29006 may transmit the position information about the points to the point combiner 29012.

The coordinate inverse transformer 29006 may transmit, to the partitioned data input unit 29001, information indicating that geometry decoding has been performed on bricks corresponding to the points.

The coordinate inverse transformer 29006 may perform the operations of the point cloud video decoder 10006 of FIG. 1, the decoding 20003 of FIG. 2, and/or the coordinate inverse transformer 11004 of FIG. 11.

The second arithmetic decoder 29007 receives a geometry bitstream on a brick-by-brick basis. The second arithmetic decoder 29007 may decode the attribute bitstream. The second arithmetic decoder 29007 outputs the decoded attribute information.

The second arithmetic decoder 29007 may perform the operations of the point cloud video decoder 10006 of FIG. 1, the decoding 20003 of FIG. 2, the arithmetic decoding 11005 of FIG. 11, and/or the arithmetic decoder 13007 of FIG. 13.

The inverse quantization processor 29008 receives the decoded attribute information generated by the second arithmetic decoder 29007. The inverse quantization processor 29008 inversely quantizes the received decoded attribute information. The inverse quantization processor 29008 may output the inversely quantized attribute information and transmit the inversely quantized attribute information to the prediction/lifting/RAHT inverse transform processor 29009.

The inverse quantization processor 29008 may perform the operations of the point cloud video decoder 10006 of FIG. 1, the decoding 20003 of FIG. 2, the inverse quantizer 11006 of FIG. 11, and/or the arithmetic decoder 13007 of FIG. 13.

The prediction/lifting/RAHT inverse transform processor 29009 receives the geometry information inversely quantized by the inverse quantization processor 29008, and inversely transforms the same. The prediction/lifting/RAHT inverse transform processor 29009 may inversely transform the inversely quantized attribute information based on at least one of prediction, lifting, and RAHT. The prediction/lifting/RAHT inverse transform processor 29009 may inversely transform the attribute information based on the geometry information (or restored geometry information) reconstructed by the geometry reconstructor 29005.

The prediction/lifting/RAHT inverse transform processor 29009 may perform the operations of the point cloud video decoder 10006 of FIG. 1, the decoding 20003 of FIG. 2, the RAHT 11007 of FIG. 11, the LOD generator 11008 of FIG. 11, and/or the inverse lifter 11009 of FIG. 11.

The attribute reconstructor 29010 reconstructs the attribute information based on the attribute information inversely transformed by the prediction/lifting/RAHT inverse transform processor 29009. The attribute reconstructor outputs the reconstructed attribute information and transmits the same to the color inverse transform processor 29011.

The attribute reconstructor 29010 may perform the operations of the point cloud video decoder 10006 of FIG. 1, the decoding 20003 of FIG. 2, the color inverse transformer 11010 of FIG. 11, and/or the color inverse transform processor 13010 of FIG. 13.

The color inverse transformer 29011 receives the geometry information reconstructed by the attribute reconstructor 29010. The color inverse transformer 29011 may perform inverse color transform on the reconstructed geometry information. The color inverse transformer 29011 outputs attribute information about the points of the point cloud data.

The color inverse transformer 29006 may transmit, to the partitioned data input unit 29001, information indicating that attribute decoding has been performed on bricks corresponding to the points. The attribute reconfiguration unit 29010 may perform the operations of the point cloud video decoder 10006 of FIG. 1, the decoding 20003 of FIG. 2, the color inverse transformer 11010 of FIG. 11, and/or the color inverse transform processor 13010 of FIG. 13.

The point combiner 29012 receives the geometry information (position information) about the points of the point cloud data and/or the attribute information about the points according to embodiments. The point combiner 29012 receives the geometry information (position information) about the points of the point cloud data and/or the attribute information about the points in a brick unit, and combines the same on a brick-by-brick basis. The point combiner 29012 outputs the point cloud data in a brick unit including the position information and the attribute information about the points.

In the method of receiving point cloud data according to the embodiments, when the received point cloud data is divided into one or more bricks, the decoding may further include combining geometry information and attribute information about points in the independently decoded bricks.

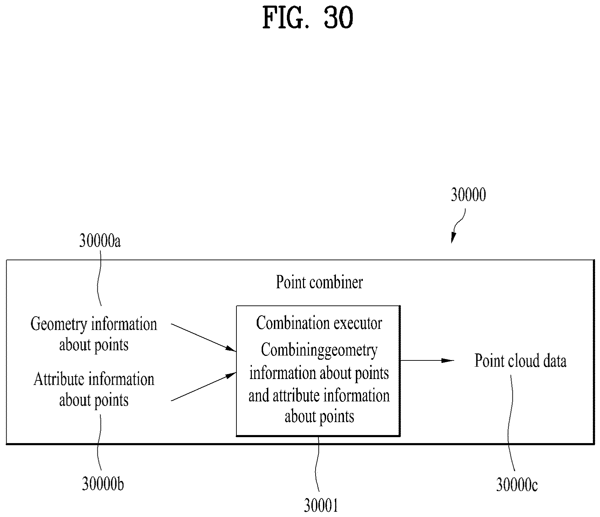

FIG. 30 illustrates a point combiner of a point cloud decoder according to embodiments.

A point combiner 30000 will be described. The point combiner 30000 receives geometry information 30000a about points and/or attribute information 30000b about the points. The point combiner 30000 may output point cloud data 30000c by combining the received geometry information 30000a and attribute information 30000b about the points. The point combiner 30000 includes a combination executor 30001.

The combination executor 30001 may receive geometry information and attribute information about points for each brick or tile. The point combiner 30000 may combine the received geometry information and attribute information about the points for each brick or tile based on a combination method.

The combination method according to the embodiments refers to an operation based on the reverse process of at least one of the methods such as multiplexing, MVC bit string combination, sequential combination, importance-based combination, and the like. After the position value (geometry information) of the points and the attribute value (attribute information) of the points are each decoded, the point cloud decoder according to the embodiments determines a combination method to use to combine the position value and the attribute value.

The combination executor 30001 may map one attribute value (attribute information) to one position value (geometry information) in a one-to-one correspondence manner. The combination executor 30001 may use the method of lossy combination when one attribute value (attribute information) cannot be mapped to one position value (geometry information) in the one-to-one correspondence manner. For example, the attribute value (attribute information) that has been present for a specific position value (geometry information) may be absent, and multiple attribute values may be present for one position value. In the lossy combination, when multiple pieces of attribute information are mapped, point information may be configured by duplicated_attribute_index.

The point cloud decoder according to the embodiments (e.g., the point combiner 30000 or the combination executor 30001) may combine the geometry information about points and the attribute information of the points based on information (e.g. combining_filter_index) indicating a combination method contained in the bitstream received by the point cloud data reception device.

The geometry information 30000a about the points refers to the geometry bitstream decoded by the point cloud decoder. The point geometry information 30000a may be the geometry information about the points output from the coordinate inverse transformer 29006 of FIG. 29 or the decoded geometry information output from the geometry information decoder 28001 of FIG. 28.

The attribute information 30000b about the points refers to the attribute bitstream decoded by the point cloud decoder. The point attribute information 30000b may be the attribute information about the points output from the color inverse transform processor 29011 of FIG. 29 or the decoded attribute information output from the attribute information decoder 28002 of FIG. 28.

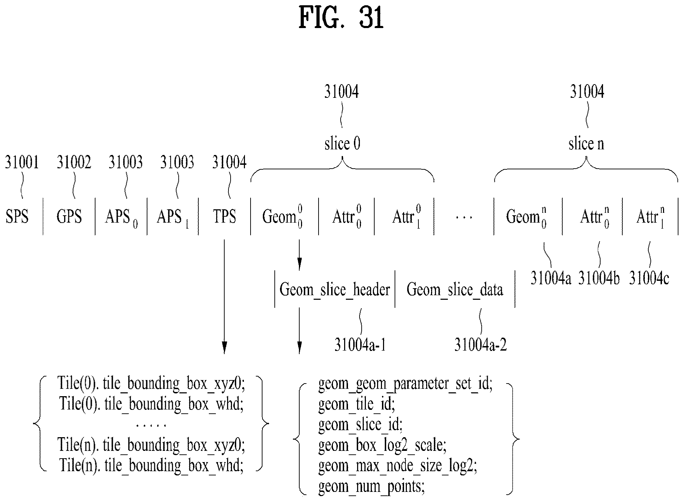

FIG. 31 illustrates an exemplary bitstream structure of point cloud data according to embodiments.

The point cloud data transmission device according to the embodiments may transmit a bitstream 31000 having the bitstream structure illustrated in FIG. 31. The bitstream 31000 of the point cloud data may include a sequential parameter set (SPS) 31001, a geometry parameter set (GPS) 31002, an attribute parameter set (APS) 31003, a tile parameter set (TPS) 31004, and one or more slices (slice 0, slice 1,..., slice n) 31004. The bitstream 31000 of the point cloud data may include one or more tiles. A tile may be a group of slices including one or more slices. The bitstream 31000 provides the tiles or slices such that the point cloud data may be partitioned and processed by regions. Each region of the bitstream 31000 may have a different importance. Accordingly, when the point cloud data is partitioned into tiles, different filters (encoding methods) and different filter units may be applied to the respective tiles. When the point cloud is partitioned into slices, different filters and different filter units may be applied to the respective slices.

By transmitting the point cloud data according to the structure of the bitstream 31000 illustrated in FIG. 31, the point cloud data transmission device according to the embodiments may allow the encoding operation to be applied differently according to the importance, and allow a good-quality encoding method to be used in an important region.

The point cloud data reception device may be allowed to apply different filtering (decoding methods) to the respective regions (divided into tiles or slices) according to the processing capacity of the reception device, rather than using a complex decoding (filtering) method to the entire point cloud data. Thereby, a better image quality may be ensured for regions important to the user and appropriate latency may be ensured in the system.

The SPS 31001 is a syntax structure containing syntax elements that apply to zero or more entire CVSs as determined by the content of a syntax element found in the PPS referred to by a syntax element found in each slice segment header. The SPS may include sequence information about the point cloud data bitstream according to the embodiments.

The GPS 31002 may be a syntax structure including syntax elements that apply to zero or more entire geometry (or encoded geometry). The GPS 31002 may include information about a method of encoding attribute information of the point cloud data included in the one or more slices 31004. The GPS 31002 may include SPS identifier information indicating the SPS 31001 to which the included geometry parameter is related, and GPS identifier information for identifying the GPS.

The APS 31003 may be a syntax structure including syntax elements that apply to zero or more entire attributes (or encoded attributes). The APS 31003 may include information about a method of encoding attribute information of the point cloud data included in the one or more slices 31004. The APS 31003 may include SPS identifier information indicating the SPS 31001 to which the included geometry parameter is related, and APS identifier information for identifying the APS.

The TPS 31004 may be a syntax structure including syntax elements that apply to zero or more entire tiles (or encoded tiles). A tile inventory includes information about zero or more tiles included in the point cloud data bitstream. According to embodiments, the tile inventory may be referred to as a tile parameter set (TPS).

The TPS 31004 may include identifier information for identifying one or more tiles and information indicating a range of the one or more tiles (i.e., a bounding box of the tile). The information indicating the range of the one or more tiles (i.e., the bounding box of the tile) may include coordinate information about a point that is a reference of a bounding box represented by a corresponding tile (e.g., Tile(n).tile bounding_box_xyz0) and information about the width, height, and depth of the bounding box (e.g., Tile(n).tile bounding box _whd). When a plurality of tiles is present, the tile inventory 33004 may include information indicating a bounding box for each of the tiles. For example, when each tile is indicated as 0 to n by the identifier information for the tiles, the information indicating the bounding box of each tile may be represented as Tile(0).tile_bounding_box _xyz0, Tile(0).tile_bounding_box_whd, Tile(1).tile_bounding_box _xyz0, Tile(1).tile_bounding_box_whd, and so on.

The slice 31004 may be a unit of encoding of the point cloud data by the point cloud data transmission device. The slice 31004 may be a unit including one geometry bitstream (Geom00) 31004a and one or more attribute bitstreams (Attr00 and Attr10) 31004b.

The slice 31004 may include a geometry slice (Geom) 31004a representing geometry information about the point cloud data included in the slice, and one or more attribute slices (Attr) 31004b and 31004c representing attribute information about the point cloud data included in the slice.

The geometry slice (Geom) 31004a includes geometry slice data (Geom slice_data) 31004a-2 including geometry information about the point cloud data, and a geometry slice header (GSH) (Geom_slice_header) 31004a-1 including information about the geometry slice data.

The GSH 31004a-1 contains information about the geometry slice data 31004a-2 in the slice. For example, the GSH 31004a-1 may contain a geometry parameter set identifier (geom_geom_parameter_set id) for identifying the GPS 31002 representing the geometry information about the slice, and a geometry slice identifier (geom slice id) for identifying the geometry slice, geometry box origin information (geomBoxOrigin) indicating the origin of the box of the geometry slice data, information (geom_box_log2_scale) indicating a logarithmic scale of the geometry slice, and information (geomnum_points) related to the number of points in the geometry slice.

When the point cloud data bitstream according to the embodiments contains one or more tiles, the header of the geometry bitstream may further contain information (geom_tile_id) for identifying a tile including the geometry bitstream.

The attribute slice (Attr) 31004b, 31004c includes attribute slice data (Attr slice _data) containing attribute information about the point cloud data and an attribute slice header (ASH) (Attr_slice_header) 33005c containing information about the attribute slice data.

According to embodiments, parameters required to encode a point cloud may be newly defined as a parameter set and header information for the point cloud. For example, the parameters may be added to the attribute parameter set RBSP syntax in encoding attribute information, and be added to tile_header syntax in performing tile-based encoding.

As the point cloud data transmission/reception method according to the embodiments provides the above-described bitstream structure, it may increase the decoding performance of the receiver for the attribute information of the point cloud data.

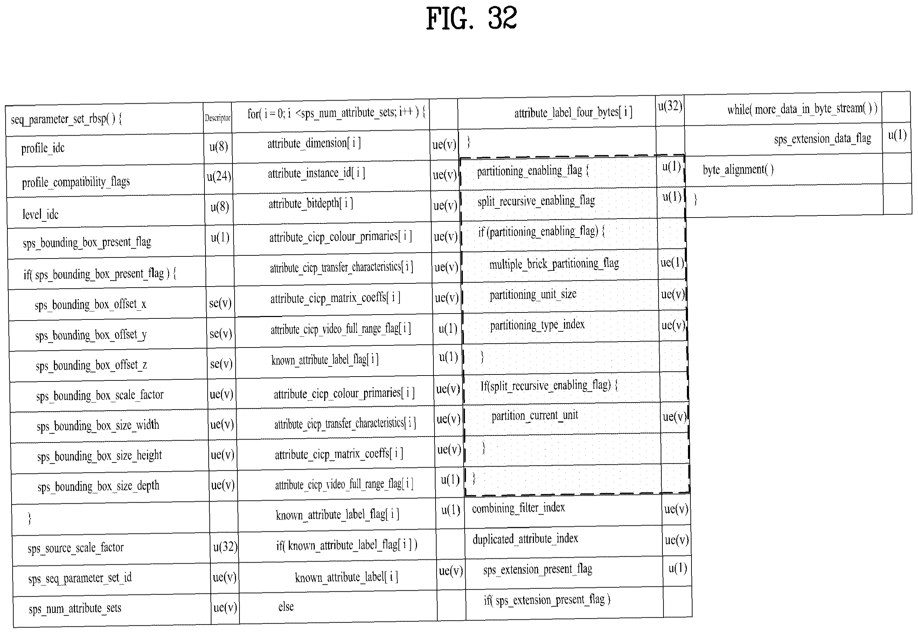

FIG. 32 illustrates a sequence parameter set (SPS) of a bitstream according to embodiments.

Parameters shown in FIG. 32 may be included in the SPS illustrated in FIG. 31. The SPS according to the embodiments may contain signaling information related to the brick partitioning or brick tiling described with reference to FIGS. 18 to 30, and/or related signaling information.

**profile_idc** indicates a profile to which the bitstream conforms as specified in Annex A. Bitstreams shall not contain values of profile idc other than those specified in Annex A. Other values of profile idc are reserved for future use by ISO/IEC.

**profile_compatibility_flags** equal to 1, indicates that the bitstream conforms to the profile indicated by profile idc equal to j as specified in Annex A. The value of profile_compatibility_flag[j] shall be equal to 0 for any value of j that is not specified as an allowed value of profile_idc in Annex A.

**level_idc** indicates a level to which the bitstream conforms as specified in Annex A. Bitstreams may not contain values of level_idc other than those specified in Annex A. Other values of level_idc are reserved for future use by ISO/IEC.

**sps_bounding_box_present_flag** equal to 1 specifies the bounding box offset and size information is signalled.

**sps_bounding_box_offset_x** indicates the x offset of the source bounding box in the cartesian coordinates. When not present, the value of sps bounding_box_offset_x is inferred to be 0.

**sps_bounding_box_offset_y** indicates indicates the y offset of the source bounding box in the cartesian coordinates. When not present, the value of sps_bounding_box_offset_y is inferred to be 0.

**sps_bounding_box_offset_z** indicates indicates the z offset of the source bounding box in the Cartesian coordinates. When not present, the value of sps bounding box _offset_z is inferred to be 0.

**sps_bounding_box_scale_factor** indicates the scale factor the source bounding box in the Cartesian coordinates. When not present, the value of sps_bounding_box_scale_factor is inferred to be 1. Indicates. When not present, the value of sps_bounding_box_scale_factor is inferred to be 0.

**sps_bounding_box_size_width** indicates the width of the source bounding box in the Cartesian coordinates. When not present, the value of sps bounding box _size_width is inferred to be a specific value (such as 10).

**sps_bounding_box_size_height** indicates the height of the source bounding box in the Cartesian coordinates. When not present, the value of sps bounding box_sizeheight is inferred to be 1. When not present, the value of sps bounding box_size_hieght is inferred to be 0.

**sps_bounding_box_size_depth** indicates the depth of the source bounding box in the Cartesian coordinates. When not present, the value of sps_bounding_box_size_depth is inferred to be 1. When not present, the value of sps bounding box _size_depth is inferred to be 0.

**sps_source_scale_factor** indicates the scale factor of the source point cloud.

**sps_seq_parameter_set_id** provides an identifier for the SPS for reference by other syntax elements. In The value of sps_seq_parameter_set_id may be in the range of 0 to 15, inclusive in bitstreams conforming to this version of this Specification. The value other than 0 for sps_seq_parameter_set_id is reserved for future use by ISO/IEC.

**sps_num_attribute_sets** indicates the number of coded attributes in the bitstream. The value of sps_num_attribute_sets may be in the range of 0 to 64.

**attribute_dimension[ i ]** specifies the number of components of the i-th attribute.

**attribute_instance_id[ i ]** specifies attribute instance id.

**attribute_bitdepth[ i ]** specifies the bitdepth of the i-th attribute signal(s).

**attribute_cicp_colour_primaries[ i ]** indicates the chromaticity coordinates of the colour attribute source primaries.

**attribute_cicp_transfer_characteristics[ i ]** either indicates the reference opto-electronic transfer characteristic function of the colour attribute as a function of a source input linear optical intensity Lc with a nominal real-valued range of 0 to 1 or indicates the inverse of the reference electro-optical transfer characteristic function as a function of an output linear optical intensity Lo with a nominal real-valued range of 0 to 1.

**attribute_cicp_matrix_coeffs[ i ]** describes the matrix coefficients used in deriving luma and chroma signals from the green, blue, and red, or Y, Z, and X primaries.

**attribute_cicp_video_full_range_flag[ i ]** specifies indicates the black level and range of the luma and chroma signals as derived from E'Y, E'PB, and E'PR or E'R, E'G, and E'B real-valued component signals.

**known_attribute_label_flag[ i ]** equal to 1 specifies know_attribute_label is signalled for the i-th attribute. known_attribute_label_flag[ i ] equal to 0 specifies attribute _label_four bytes is signalled for the i-th attribute.

**known_attribute_label[** i **]** equal to 0 specifies the attribute is colour. **known_attribute_label[** i **]** equal to 1 specifies the attribute is reflectance. **known_attribute_label[** i **]** equal to 2 specifies the attribute is farme index.

In accordance with some embodiments, the SPS may further include partitioning_enabling_flag, split_recursive_enabling_flag, partitioning_unit_size, partition_current_unit, multiple_brick_partitioning_flag, partitioning_type_index, combining_filter_index, duplicated_attribute_index.

**partitioning_enabling_flag** specifies information (or a flag) indicating whether the point cloud encoder according to the embodiments partitions point cloud data into bricks.

The point cloud data reception device according to the embodiments (e.g., the receiver 29000 or the partitioned data input unit 29001 of FIG. 29) may determine whether the point cloud data in the received bitstream is partitioned into bricks based on partitioning_enabling flag, and may receive the point cloud data in the received bitstream on a brick-by-brick basis.

**split_recursive_enabling_flag** specifies information (or a flag) indicating whether the point cloud encoder according to the embodiments has re-partitioned the partitioned brick.

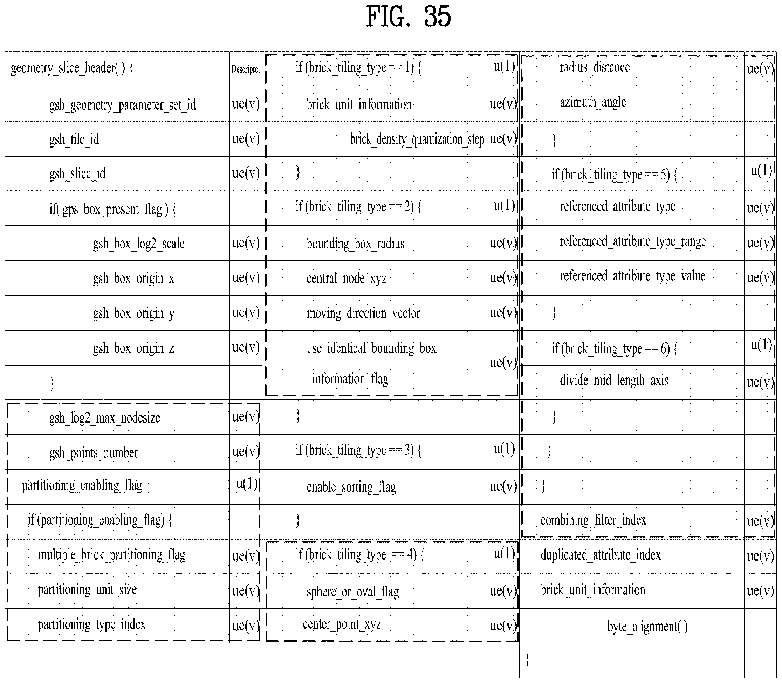

The point cloud data reception device according to embodiments (e.g., the receiver 35000 or the partitioned data input unit 35001 of FIG. 35) may determine whether the bricks of the point cloud data in the received bitstream are partitioned into sub-partitioning units, based on split recursive _enabling flag.

**partitioning_unit_size** is information indicating a partitioning unit of bricks partitioned by the point cloud encoder according to embodiments. For example, partitioning unit size may indicate the unit size of the brick according to the embodiments.

The point cloud data reception device (e.g., the receiver 29000 or the partitioned data input unit 29001 of FIG. 29) may determine the partitioning unit of bricks of the point cloud data in the received bitstream based on partitioning_unit_size, and decode a portion of the bitstream corresponding to the partitioning unit.

**partition_current_unit** is information indicating a partitioning unit of a re-partitioned slice or brick when the point cloud encoder according to the embodiments re-partitioning bricks. For example, partition_current_unit may indicate a unit size of a re-partitioned brick according to embodiments.

Upon determining that bricks of the point cloud data of the received bitstream are partitioned into sub-partitioning units according to split_recursive_enabling_flag, the point cloud data reception device (e.g., the receiver 29000 or the partitioned data input unit 29001 of FIG. 29) may determine a partitioning unit of the re-partitioned bricks based on partition_current_unit.

**multiple_brick_partitioning_flag** is information (or a flag) indicating whether to perform partitioning based on a method of partitioning point cloud data into a plurality of bricks according to embodiments. That is, this parameter may be information indicating whether to use various partitioning methods as partitioning types to be used for brick partitioning.

Based on multiple_brick_partitioning_flag, the point cloud data reception device (e.g., the partitioned data input unit 29001 of the receiver 29000 in FIG. 29) may determine whether the point cloud data is partitioned based the one or more brick partitioning methods.

**partitioning_type_index** specifies a method of partitioning point cloud data into bricks according to embodiments. The method of partitioning the data into bricks may include point density-based brick tiling, circular sector brick tiling, layer brick tiling, and spherical/oval region brick tiling, attribute-based brick tiling, and adaptive axial length-based brick tiling. partitioning_type index may be determined, for example, as follows.

partitioning_type_index=1 indicates that point density-based brick tiling has been performed. The point density-based brick tiling may be partitioning of bricks according to the method illustrated in FIG. 21.

partitioning_type_index=2 indicates that circular sector brick tiling has been performed. The circular sector brick tiling may be partitioning of bricks according to the method illustrated in FIG. 22.

partitioning_type_index=3 indicates that layer brick tiling has been performed. The layer brick tiling may be partitioning of bricks according to the method illustrated in FIG. 23.

partitioning_type_index=4 indicates that spherical/oval region tiling has been performed. The spherical/oval brick partitioning may be partitioning of bricks according to the method illustrated in FIG. 24.

partitioning_type_index=5 indicates that attribute-based brick tiling has been performed. The attribute-based brick tiling may be partitioning of bricks according to the method illustrated in FIG. 25.

partitioning_type_index=6 indicates that adaptive axial length-based brick tiling has been performed. The adaptive axial length-based brick tiling may be partitioning of bricks according to the method illustrated in FIG. 26.

partitioning_type_index=7 indicates that a user-defined brick tiling method other than the above-described methods has been performed. According to embodiments, a long axis among the coordinate axes of a bounding box may be partitioned based on a short axis, and then the partitioned bricks may be re-partitioned. In this case, a process of re-partitioning the middle-length axis based on the short axis may be performed.

The point cloud data reception device (e.g., the receiver 29000 or the partitioned data input unit 29001 of FIG. 29) may decode the point cloud data on a brick-by-brick basis based on partitioning_type_index.

**combining_filter_index** represents information about a combination method used by the encoder to transmit the combined geometry bitstream and attribute bitstream. According to embodiments, a combination method may be signaled according to a transmission environment and characteristic of a bitstream. Accordingly, the compression rate may be improved.

When combining _filter_index=0, it indicates that combination has been performed based on the multiplexing method. According to embodiments, the multiplexing method may sequence an individual bitstream as a group of bits or bytes.

When combining_filter_index=1, it indicates that combination has been performed based on the sequential combination method. According to embodiments, the sequential combination method is to sequentially combine the geometry bitstream and the attribute bitstream.

When combining _filter_index=2, it indicates that combination has been performed based on the importance-based combination method. According to embodiments, in the importance-based combination, bitstreams with higher importance may be combined first.

The point cloud data reception device (e.g., the point combiner 29012 of FIG. 29, the point combiner 30000 of FIG. 30) may extract a geometry bitstream and an attribute bit from the received bitstream based on combining_filter_index. For example, when combining_filter index is 0, the point cloud data reception device according to the embodiments may extract the geometry bitstream and the attribute bitstream from the received bitstream based on the reverse process of the multiplexing. For example, when combining_filter_ index is 1, the point cloud data reception device may extract the geometry bitstream and the attribute bitstream from the received bitstream based on the reverse process of the sequential combination. For example, when combining_filter_ index is 2, the point cloud data reception device may extract the geometry bitstream and the attribute bitstream from the received bitstream based on the reverse process of the importance-based combination.

When a plurality of pieces of attribute information is mapped to the same geometry information, **duplicated_attribute_index** indicates that the corresponding geometry includes duplicated attribute information. A duplicated attribute may be applied to the attribute information about a duplicated point.

When duplicated_attribute_index=0, it indicates color duplication. When multiple color values are mapped to the same geometry information in a duplicated manner, the duplicated attribute may be used.

When duplicated_attribute_index=1, it indicates reflectance duplication. When multiple reflectance values are mapped to the same geometry information in a duplicated manner, the duplicated attribute may be used.

The point cloud data reception device according to the embodiments may determine attribute information in which geometry is duplicated based on duplicated_attribute_index.

**sps_extension_present_flag** equal to 1 specifies that the sps_extension_data syntax structure is present in the SPS RBSP syntax structure. sps_extension_present_flag equal to 0 specifies that this syntax structure is not present. When not present, the value of sps_extension_present_flag is inferred to be equal to 0.

**sps_extension_data_flag** may have any value. Its presence and value do not affect decoder conformance to profiles specified in Annex A Decoders conforming to a profile specified in Annex A.

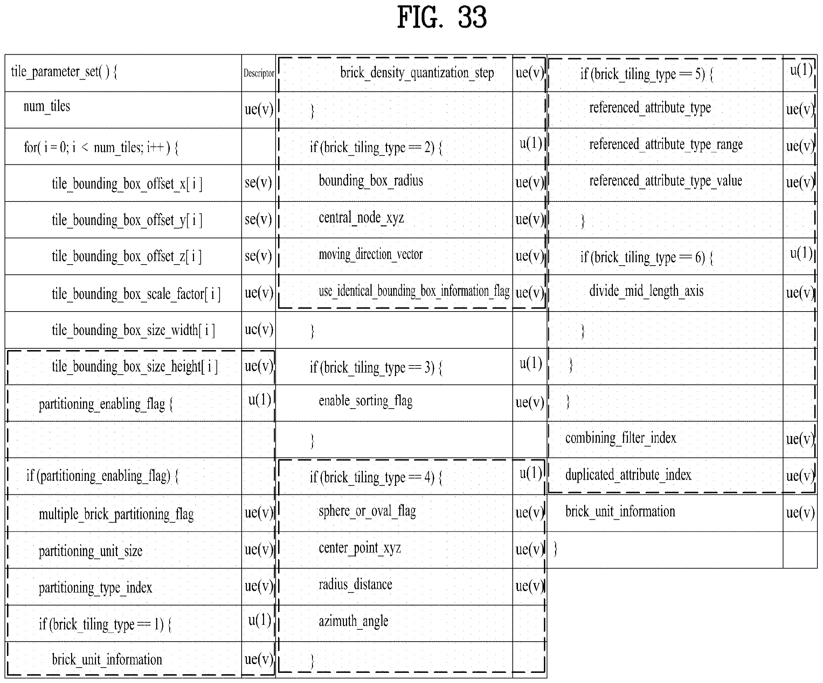

FIG. 33 illustrates a tile parameter set (TPS) of a bitstream according to embodiments.

The parameters shown in FIG. 33 may be included in the TPS described with reference to FIG. 31. The TPS according to the embodiments may include signaling information related to the brick partitioning or brick tiling described with reference to FIGS. 18 to 30, and/or related signaling information.

**num_tiles** represents the number of tiles signalled for the bitstream. When not present, num_tiles is inferred to be 0.

**tile_bounding_box_offset_x[ i ]** indicates the x offset of the i-th tile in the cartesian coordinates. When not present, the value of tile_bounding_box_offset_x[ 0 ] is inferred to be sps bounding box _offset _x.

**tile_bounding_box_offset_y[ i ]** indicates the y offset of the i-th tile in the cartesian coordinates. When not present, the value of tile_bounding_box_offset_y[ 0 ] is inferred to be sps_bounding_box_offset_y.

**tile_bounding_box_offset_z[ i ]** indicates indicates the z offset of the i-th tile in the Cartesian coordinates. When not present, the value of tile_bounding_box_offset_z[ 0 ] is inferred to be sps bounding box _offset z.

**tile_bounding_box_scale_factor[ i ]** indicates the scale factor the i-th tile in the Cartesian coordinates. When not present, the value of tile_bounding_box_scale_factor[ 0 ] is inferred to be sps bounding box _scale factor.

**tile_bounding_box_size_width[ i ]** indicates the width of the i-th tile in the Cartesian coordinates. When not present, the value of tile_bounding_box_size_width[ 0 ] is inferred to be sps bounding box _size _width.

**tile_bounding_box_size_height[ i ]** indicates the height of the i-th tile in the Cartesian coordinates. When not present, the value of tile_bounding_box_size_height[ 0 ] is inferred to be sps bounding box_sizeheight.

**tile_bounding_box_size_depth[ i ]** indicates the depth of the i-th tile in the Cartesian coordinates. When not present, the value of tile_bounding_box_size_depth[ 0 ] is inferred to be sps bounding box _size _depth.

In some embodiments, the TPS may further include brick_unit_information, brick_density_quantization_step, bounding box radius, central_node_xyz, moving_direction_vector, use_identical_bounding_box_information_flag, enable_sorting_flag, sphere_or_oval flag, center_point_xyz, radius_distance, azimuth_angle, referenced_attribute_type, referenced_attribute_type_range, referenced_attribute_type_value, combining_filter_index, duplicated_attnbute_index, divide_mid_length_axis.

**brick_unit_information** specifies unit information about one brick and/or information about a partitioning method.

**brick_density_quantization_step** indicates the degree to sampling can be performed for a brick to be partitioned by specifying a quantization coefficient to be used in the brick.

**bounding_box_radius** is information indicating the radius of a corresponding brick when the point cloud data transmission device performs circular sector brick tiling according to embodiments. This parameter may be the bounding_box radius parameter of FIG. 22. This parameter may be present in each brick.

**central_node_xyz** is information indicating the x-coordinate, y-coordinate, and z-coordinate of the center point information about the brick when the point cloud data transmission device performs the circular sector brick tiling according to the embodiments. This parameter may be the parameter central_node_xyz of FIG. 22.

**moving_direction_vector** indicates a movement direction of an object represented by the point cloud data when the point cloud data transmission device performs the circular sector brick tiling according to the embodiments. moving_direction_vector may be expressed in a vector form. It may be the parameter moving_direction_vector of FIG. 22.

**use_identical _bounding _box _information _flag** is information (or a flag) indicating whether to define the identical bounding box for all frames when the point cloud data transmission device performs the circular sector brick tiling according to the embodiments. According to embodiments, the bounding box information may be defined for each frame, or may be determined by the x, y, and z values of each frame. It may be the parameter use_identical_bounding_box_information_flag of FIG. 22.

**enable _sorting _flag** is information (or a flag) indicating whether the point cloud data has been sorted (in, for example, ascending order, descending order, Morton code order) when the point cloud data transmission device performs the layer brick tiling according to the embodiments,. It may be the parameter enable_sorting_flag of FIG. 23. This parameter may be present in each brick.

**sphere_or_oval_flag** indicates whether to partition the point cloud data into spherical or oval regions when the point cloud data transmission device performs the spherical/oval region tiling according to the embodiments. It may be the parameter sphere_or oval flag of FIG. 24. This parameter may be present in each brick.

**center_point_xyz** contains coordinate information (e.g., (x , y, z) information) about the center point of a spherical/oval region according to the embodiments when the point cloud data transmission device performs the spherical/oval region tiling according to the embodiments. It may be the parameter center_point_xyz of FIG. 24. This parameter may be present in each brick.

**radius_distance** specifies the radius information (or distance information) about a brick of a spherical/oval shape according to embodiments when the point cloud data transmission device performs the spherical/oval region tiling according to the embodiments. It may be the parameter radius_distance of FIG. 24. This parameter may be present in each brick.

**azimuth_angle** may specify an angle formed between a distance from the origin and a reference vector in a spherical coordinate system when the point cloud data transmission device performs the spherical/oval region tiling according to embodiments. This parameter may be present in each brick. It may be the parameter azimuth_angle of FIG. 24.

**referenced_attribute_type** indicates attribute information that is a reference for brick partitioning when the point cloud data transmission device performs the attribute-based brick tiling according to the embodiments. It may be the parameter referenced_attribute_type_of FIG. 25.

**referenced_attribute_type_range** indicates whether to configure a brick with a range of attribute values of the attribute information when the point cloud data transmission device performs the attribute-based brick tiling according to the embodiments. It may be the parameter referenced_attribute_type_of FIG. 25.

**referenced _attribute _type value** is information indicating whether to configure a brick with the attribute value of the attribute information. It may be the parameter referenced_attribute_type_value of FIG. 25.

**combining_filter_index** specifies information about a combination method used by the encoder to transmit the combined geometry bitstream and attribute bitstream. According to embodiments, the combination method may be signaled according to a transmission environment and a characteristic of the bitstream. Accordingly, the compression rate may be improved. combining_filter_index may be combining_filter_index of FIG. 32.

When a plurality of pieces of attribute information is mapped to one piece of geometry information, **duplicated_attribute_index** indicates that the corresponding geometry includes duplicated attribute information. The duplicated attribute may be applied to the attribute information about a duplicated point. duplicated_attribute_index may be duplicated_attribute_index of FIG. 32.

divide_mid_length_axis specifies information about a middle-length axis when the point cloud data transmission device performs the adaptive axial length-based tiling of FIG. 26 according to the embodiments. For example, divide_mid_length_axis equal to 0 may indicate that the X-axis is the middle-length axis. divide_mid length _axis equal to 1 may indicate that the Y-axis is the middle-length axis. divide_mid_length_axis equal to 2 may indicate that the Z-axis is the middle-length axis.

The point cloud data reception device according to the embodiments (e.g., the receiver 29000 of FIG. 29, the partitioned data input unit 29001 of FIG. 29, the point combiner 29012 of FIG. 29, the point combiner 30000 of FIG. 30) may determine the shape of bricks according to embodiments based on the parameters brick_unit_information, brick_density _quantization_step, bounding box radius, central_node_xyz, moving_direction_vector, use_identical_bounding_box_information_flag, enable_sorting_flag, sphere_or_oval flag, center_point_xyz, radius_distance, azimuth_angle, referenced_attribute_type, referenced_attribute_type_range, referenced _attribute

_type value, combining_filter_index, and duplicated_attribute index, divide_mid_length_axis, and may identify point cloud data to be decoded based on the above-described parameters.

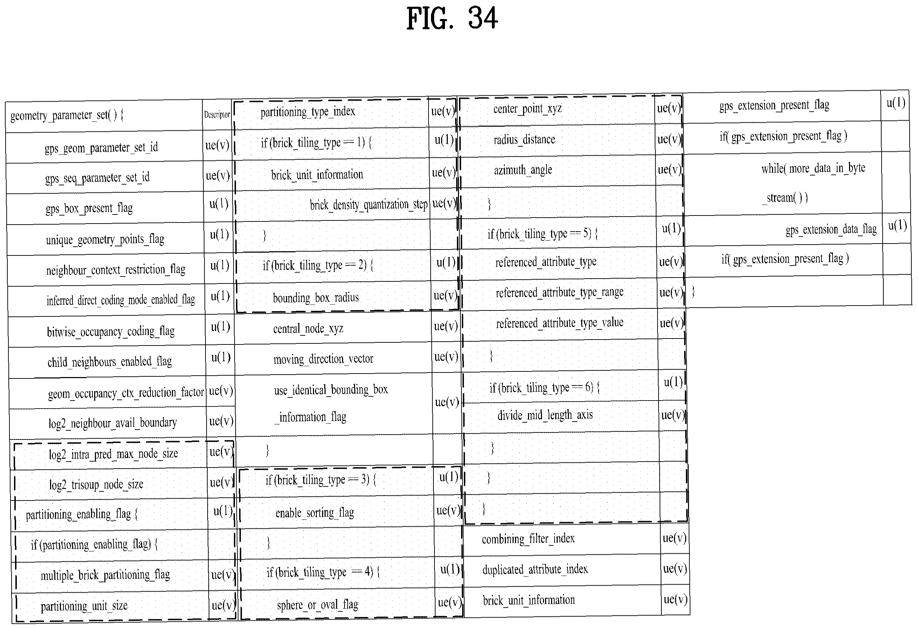

FIG. 34 illustrates a geometry parameter set (GPS) of a bitstream according to embodiments.

The parameters shown in FIG. 34 may be included in the GPS described with reference to FIG. 31. The GPS according to the embodiments may include signaling information related to the brick partitioning or brick tiling described with reference to FIGS. 18 to 30, and/or related signaling information.

**gps_geom_parameter_set_id** provides an identifier for the GPS for reference by other syntax elements. The value of gps_seq_parameter_set_id may be in the range of 0 to 15, inclusive.

**gps_seq_parameter_set_id** specifies the value of sps_seq_parameter_set_id for the active SPS. The value of gps_seq_parameter_set_id shall be in the range of 0 to 15, inclusive.

**geometry_coding_type** indicates that the coding type for the geometry in Table 7 1Table 7 1 for the given value of geometry _coding type. The value of geometry_coding type shall be equal to 0 or 1 in bitstreams conforming to this version of this Specification. Other values of geometry _coding type are reserved for future use by ISO/IEC. Decoders conforming to this version of this Specification may ignore reserved values of geometry _coding type. 0= Octree, 1=Triangle Soup (Trisoup)).

**gps_box_present_flag** equal to 1 specifies an additional bounding box information is provided in a geometry header that references the current GPS. gps_bounding_box_present_flag equal to 0 specifies that additional bounding box information is not signalled in the geometry header.

**unique_geometry_points_flag** equal to 1 indicates that all output points have unique positions. unique_geometry_points_flag equal to 0 indicates that the output points may have same positions.

**neighbour_context_restriction_flag** equal to 0 indicates that octree occupancy coding uses contexts determined from six neighbouring parent nodes. neighbour_context_restriction_flag equal to 1 indicates that octree coding uses contexts determined from sibling nodes only.

**inferred_direct_coding _mode_enabled _flag** equal to 0 indicates the octree coding uses inferred_direct_coding_mode. inferred_direct_coding_mode_enabled_flag equal to 1 indicates the octree coding uses multiple context determined from sibling neighbouring nodes.

**log2_neighbour_avail_boundary** specifies the value of the variable NeighbAvailBoundary that is used in the decoding process as follows:
NeighbAvailBoundary = 21og2_neighbour_avail_boundary

When neighbour_context_restriction_flag is equal to 1, NeighbAvailabilityMask is set equal to 13. Otherwise, neighbour context_restrictionflag equal to 0, NeighbAvailabilityMask is set equal to

(1 <<log2_neighbour_avail_boundary).

**log2_trisoup_node_size** specifies the variable TrisoupNodeSize as the size of the triangle nodes as follows. TrisoupNodeSize = 2log2_trisoup_node_size

The value of log2_trisoup_node_size may be equal to or greater than 0. When log2 _trisoup_node_size is equal to 0, the geometry bitstream includes only the octree coding syntax.

**trisoup_depth** specifies the number of bits used to represent each component of a point coordinate. The value of trisoup_depth may be in the range of 2 to 21. [Ed(df): 21 should perhaps be a level limit].

**trisoup_triangle_level** specifies the level at which the octree is pruned. The value of trisoup triangle level may be in the range of 1 to trisoup_depth-1.

**gps_extension_present_flag** equal to 1 specifies that the gps_extension_data syntax structure is present in the GPS RBSP syntax structure. gps_extension_present_flag equal to 0 specifies that this syntax structure is not present. When not present, the value of gps_ extension_present_flag is inferred to be equal to 0.

**gps_extension_data_flag** may have any value. Its presence and value do not affect decoder conformance to profiles specified in Annex A. Decoders conforming to a profile specified in Annex A.

GPS in accordance with some embodiments may include multiple _brick_partitioning_flag, partitioning_unit_size, partitioning_type_index, brick_unit_information, brick_density_quantization_step, bounding box radius, central_node_xyz, moving_direction_vector, use_identical_bounding box information _flag, enable_sorting_flag, sphere_or_oval_flag, center_point_xyz, radius_distance, azimuth_angle, referenced_attribute_type, referenced_attribute_type_range, referenced_attribute_type_value, divide_mid_length_axis, combining_filter_index, duplicated_attribute_index, brick_unit_information as described in FIGS. 31-33.

The point cloud data reception device according to the embodiments (e.g., the receiver 29000 of FIG. 29, the partitioned data input unit 29001 of FIG. 29, the point combiner 29012 of FIG. 29, or the point combiner 30000 of FIG. 30) may determine the shape of the bricks based on the above-described parameters in the GPS, and may identify point cloud data to be decoded based on the above-described parameters.

FIG. 35 illustrates a geometry slice header (GSH) of a bitstream according to embodiments.

The parameters shown in FIG. 35 may be included in the GSH described with reference to FIG. 31. The GSH according to the embodiments may include signaling information related to the brick partitioning brick tiling described with reference to FIGS. 18 to 30, and/or related signaling information.

**gsh_geometry_parameter_set_id** specifies the value of the gps_geom_parameter_set_id of the active GPS.

**gsh_tile_id** specifies id of tile.

**gsh_slice_id** specifies id of slice.

**gsh_box_log2_scale** specifies scale value.

**gsh_box_origin_x** specifies the x of the source bounding box in the cartesian coordinates.

**gsh_box_origin_y** specifies the y of the source bounding box in the cartesian coordinates.

**gsh_box_origin_z** specifies the z of the source bounding box in the cartesian coordinates.

**gsh_log2_max_nodesize** specifies the value of the variable MaxNodeSize that is used in the decoding process as follows:

MaxNodeSize = 2( gbh_log2_max_nodesize)

**gbh_points_number** specifies the number of coded points in the slice.

GSH in accordance with some embodiments may include multiple _brick_partitioning_flag, partitioning_unit_size, partitioning_type_index, brick_unit_information, brick_density_quantization_step, bounding box radius, central_node_xyz, moving_direction_vector, use_identical_bounding box information _flag, enable_sorting_flag, sphere_or_oval_flag, center_point_xyz, radius_distance, azimuth_angle, referenced_attribute_type, referenced_attribute_type_range, referenced_attribute_type_value, divide_mid_length_axis, combining_filter_index, duplicated_attribute_index, brick_unit_information as described in FIGS. 31 to 34.

The point cloud data reception device according to the embodiments (e.g., the receiver 29000 of FIG. 29, the partitioned data input unit 29001 of FIG. 29, the point combiner 29012 of FIG. 29, or the point combiner 30000 of FIG. 30) may determine the shape of the bricks based on the above-described parameters in the GSH, and may identify point cloud data to be decoded based on the above-described parameters.

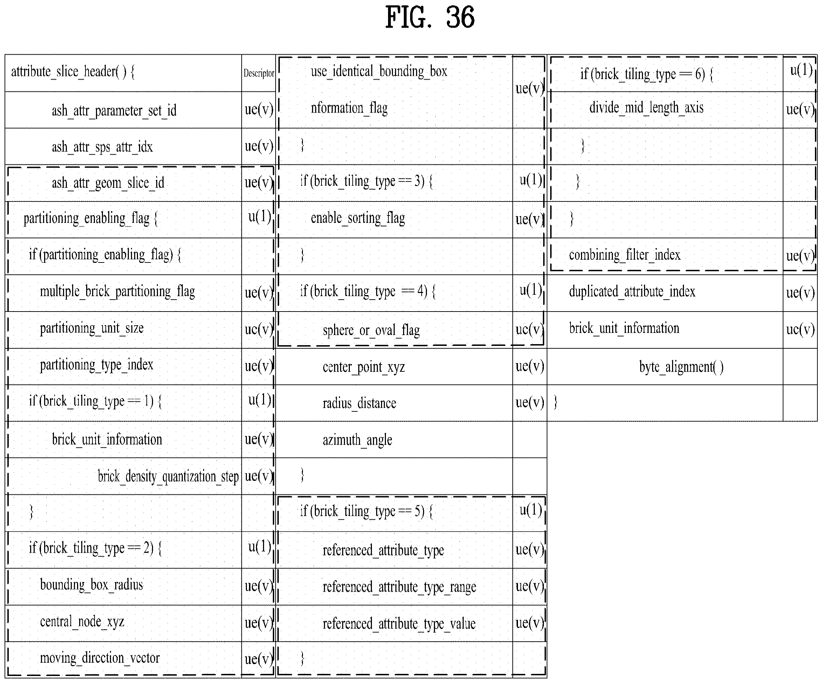

FIG. 36 illustrates an attribute slice header (ASH) of a bitstream according to embodiments.

The parameters shown in FIG. 36 may be included in the ASH described with reference to FIG. 31. The ASH according to the embodiments may include signaling information related to the brick partitioning or brick tiling described with reference to FIGS. 18 to 30, and/or related signaling information.

**abh_attr_parameter_set_id** specifies the value of the aps_attr_parameter_set_id of the active APS.

**abh_attr_sps_attr_idx** specifies the attribute set in the active SPS. The value of abh_attr_sps_attr_idx may be in the range of 0 to sps_num_attribute_sets in the active SPS.

**abh_attr_geom_slice_id** specifies the value of geom slice id.

ASH in accordance with some embodiments may include multiple _brick_partitioning_flag, partitioning_unit_size, partitioning_type_index, brick_unit_information, brick_density_quantization_step, bounding box radius, central_node_xyz, moving_direction_vector, use_identical_bounding box information _flag, enable_sorting_flag, sphere_or_oval_flag, center_point_xyz, radius_distance, azimuth_angle, referenced_attribute_type, referenced_attribute_type_range, referenced_attribute_type_value, divide_mid_length_axis, combining_filter_index, duplicated_attribute_index, brick_unit_information as described in FIGS. 31 to 34.

The point cloud data reception device according to the embodiments (e.g., the receiver 29000 of FIG. 29, the partitioned data input unit 29001 of FIG. 29, the point combiner 29012 of FIG. 29, or the point combiner 30000 of FIG. 30) may determine the shape of the bricks based on the above-described parameters in the ASH, and may identify point cloud data to be decoded based on the above-described parameters.

Accordingly, the transmitted bitstream may include signaling information. The signaling information may include information indicating whether the point cloud data are divided into bricks. In response to the information indicating that the point cloud data are divided into the bricks, the signaling information may include information indicating a method for dividing. The signaling information may further include information on a method for combining the encoded geometry information and the encoded attribute information for each of the one or more bricks. The signaling information may further include information indicating a unit of a brick of the first dividing step, and information indicating a unit of a brick of the second dividing step when the second dividing step is performed.

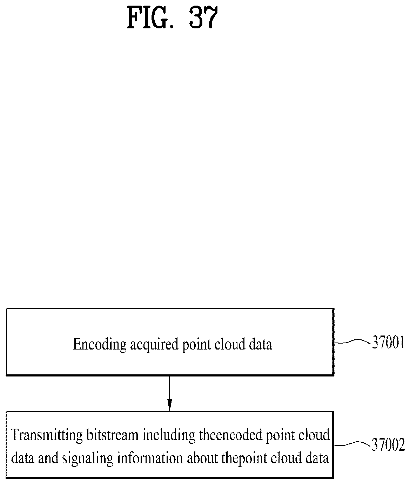

FIG. 37 is a flowchart illustrating a method of transmitting point cloud data according to embodiments.

A method of transmitting point cloud data according to the embodiments may include acquiring the point cloud data (37000), encoding the acquired point cloud data (37001), and/or transmitting a bitstream including the encoded point cloud data and signaling information (37002).

In operation 37000 of acquiring the point cloud data, the point cloud data according to embodiments may be acquired. The point cloud data acquired in operation 37000 may be data acquired according to the operation of the point cloud video acquisition 10001 of FIG. 1, the acquisition 20000 of FIG. 2, or the operation of FIG. 3.

In operation 37001 of encoding the acquired point cloud data, the point cloud data acquired in operation 37000 of acquiring the point cloud data may be divided into one or more bricks. In operation 37001 of encoding the acquired point cloud data, geometry information of the point cloud data may be encoded based on the one or more bricks. In operation 37001 of encoding the obtained point cloud data, attribute information of the point cloud data may be encoded based on the one or more bricks and reconstructed geometry information.

The operation of dividing into the one or more bricks may be performed by the spatial partitioner 18001 of FIG. 18 or the brick tiling unit 19001 of FIG. 19. The operation of dividing into the one or more bricks may be performed according to, for example, the operation described with reference to FIG. 26.

The operation of encoding the geometry information and attribute information of the point cloud data may be performed by the geometry information encoder 18002 and/or the attribute information encoder 18003 of FIG. 18. The operation of encoding the geometry information of the point cloud data may be performed as illustrated in FIG. 19.

The method for dividing according to the embodiments may be at least one of the first to sixth methods. The first method may be a method for dividing based on density of points of the point cloud data (e.g., the point density-based brick tiling illustrated in FIG. 21). The second method may be a method for dividing into one or more sectors determined based on centroid point information and radius information (e.g., the circular sector brick tiling illustrated in FIG. 22). The third method may be a method for dividing into one or more layers (e.g., the layer brick tiling of FIG. 23). The fourth method may be a method for dividing into one or more spherical regions (e.g., the spherical/oval region tiling in FIG. 24). The fifth method may be a method for dividing based on the attribute information about the points in the point cloud data (e.g., the attribute-based brick tiling in FIG. 25). The sixth method may be a method for dividing based on lengths of axes of a 3D space including the point cloud data (e.g., the adaptive axial length-based brick tiling in FIG. 26).

According to embodiments, the sixth method may be carried out based on a first dividing step for dividing a first axis of the 3D space by a length unit of a second axis, and/or a second dividing step for dividing a third axis of the 3D space by the length unit of the second axis.

In operation 37001 of encoding the acquired point cloud data, the encoded geometry information and the encoded attribute information for each of the one or more bricks may be combined. The operation of combining the encoded geometry information and the encoded attribute information according to the embodiments may be performed by the bitstream combiner 19014 of FIG. 19, the bitstream combiner 27000 of FIG. 27, or the combination executor 27001 of FIG. 27.

In operation 37002 of transmitting the bitstream including the encoded point cloud data and signaling information, the encoded point cloud data may be transmitted in the form of a bitstream. In operation 37002 of transmitting the bitstream including the encoded point cloud data and the signaling information, the signaling information described with reference to FIGS. 18 to 36 may be included in the bitstream, and the bitstream may be transmitted to the point cloud data reception device according to the embodiments.

The signaling information according to the embodiments may include information (e.g., partitioning enabling flag of FIGS. 32 to 36) indicating whether the point cloud data are divided into bricks. When the point cloud data are divided into the bricks in the method of transmitting the point cloud data, the signaling information may further include information indicating a method for dividing (e.g., partitioning_type_index in FIGS. 32 to 36).

The signaling information according to the embodiments may further include information on a method for combining the encoded geometry information and the encoded attribute information for each of the one or more bricks (e.g., combining_filter_index of FIGS. 32 to 36).

Regarding the dividing method based on the sixth method, the signaling information according to the embodiments may further include information (e.g., partitioning unit size of FIGS. 32 to 36) indicating a unit of a brick of the first dividing according to the sixth method, information (e.g., partition_current_unit of FIGS. 32 to 36) indicating whether the second dividing (re-dividing) step has been performed, information (e.g., multiple_brick_partitioning_flag of FIGS. 32 to 36) indicating whether to use various partitioning methods as the partitioning type to be used for partitioning bricks, and/or information (e.g., split_recursive_enabling_flag of FIGS. 32 to 36) indicating whether to perform the second dividing (re-dividing) step on the bricks divided by the first dividing.

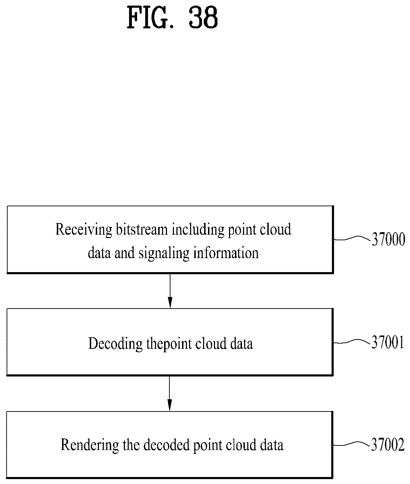

FIG. 38 is a flowchart illustrating a method of receiving point cloud data according to embodiments.

A method of transmitting point cloud data according to the embodiments may include receiving a bitstream including point cloud data and signaling information (38000), decoding the point cloud data (38001), and/or rendering the decoded point cloud data (38002).

The point cloud data received in operation 38000 of receiving the bitstream including the point cloud data and the signaling information may include a geometry bitstream and an attribute bitstream.

The signaling information according to the embodiments may include information (e.g., partitioning enabling flag of FIGS. 32 to 36) indicating whether the received point cloud data are divided into one or more bricks. The signaling information may further include information (e.g., partitioning_type_index according to FIGS. 32 to 36) indicating a brick partitioning method used for the point cloud data transmission device according to the embodiments to divide the point cloud data.

The signaling information may further include information indicating a partitioning type of one or more bricks and information related to a size of the one or more bricks (e.g., combining_filter_index, split recursive _enabling flag, partitioning unit size, partition _current unit, and/or multiple_brick_partitioning_flag according to FIGS. 32 to 36).

Operation 38001 of decoding the point cloud data may include receiving a geometry bitstream of the point cloud data, performing geometry decoding thereon, and outputting geometry information. Operation 38001 of decoding the point cloud data may include performing attribute decoding on the attribute bitstream of the point cloud data based on reconstructed geometry information. Operation 38001 of decoding the point cloud data may include outputting attribute information.

According to embodiments, when the point cloud data are divided into one or more bricks, the bricks may be decoded independently in operation 38001 of decoding the point cloud data.

In this case, operation 38001 of decoding the point cloud data may include combining geometry information and attribute information about points in the independently decoded bricks. The operation of combining the geometry information and the attribute information about the points may be performed by the point combiner 29012 of FIG. 29, the point combiner 30000 of FIG. 30, or the combination executor 30001 of FIG. 30.

In operation 38002 of rendering the decoded point cloud data, the decoded point cloud data may be rendered on a display.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

[Mode for Disclosure]

As described above, related contents have been described in the best mode for carrying out the embodiments.

[Industrial Applicability]

It will be apparent to those skilled in the art that various changes or modifications can be made to the embodiments within the scope of the embodiments. Thus, it is intended that the embodiments cover the modifications and variations of this disclosure provided they come within the scope of the appended claims and their equivalents.

**Claims**

1. A method for processing point cloud data, the method comprising:

   encoding the point cloud data; and
   transmitting a bitstream including the point cloud data and signaling information of the point cloud data.

2. The method of claim 1, wherein the method comprises:

   dividing the obtained point cloud data into one or more bricks;
   encoding geometry information of the point cloud data based on the one or more bricks; and
   encoding attribute information of the point cloud data based on the one or more bricks and reconstructed geometry information.

3. The method of claim 2, wherein the signaling information includes information representing whether the point cloud data are divided into the one or more bricks,
   in response to the information representing that the point cloud data are divided into the one or more bricks, the signaling information includes information representing a method for dividing.

4. The method of claim 3, wherein the method for dividing includes:

   a first method for dividing based on density of points of the point cloud data,
   a second method for dividing into one or more sectors based on centroid point information and radius information,
   a third method for dividing into one or more layers,
   a fourth method for dividing into one or more spherical regions,
   a fifth method for dividing based on the attribute information in the point cloud data or a sixth method for dividing based on a length of axes of 3D space including the point cloud data.

5. The method of claim 2, wherein the method comprises:
   combining the encoded geometry information and the encoded attribute information for each of the one or more bricks, the signaling information includes information of a method for combining the encoded geometry information and the encoded attribute information for each of the one or more bricks.

6. The method of claim 4, wherein a method for dividing a brick according to the sixth method includes:

   first dividing step for dividing a first axis of the 3D space by a length unit of a second axis; and
   second dividing step for dividing a third axis of the 3D space by the length unit of the second axis,
   the signaling information includes: information representing a unit of a brick of the first dividing step and information representing a unit of a brick of the second dividing step.

7. A device for processing point cloud data, the device comprising:

   an encoder configured to encode the point cloud data; and
   a transmitter configured to transmit a bitstream including the point cloud data and signaling information of the point cloud data.

8. The device of claim 7, wherein the device comprises:

a divider configured to divide the obtained point cloud data into one or more bricks;
a geometry encoder configured to encode geometry information of the point cloud data based on the one or more bricks; and
an attribute encoder configured to encode attribute information of the point cloud data based on the one or more bricks and reconstructed geometry information.

9. The device of claim 8, wherein the signaling information includes information representing whether the point cloud data are divided into the one or more bricks,
in response to the information representing that the point cloud data are divided into the one or more bricks, the signaling information includes information representing a method for dividing.

10. The device of claim 9, wherein the method for dividing includes:

a first method for dividing based on density of points of the point cloud data,
a second method for dividing into one or more sectors based on centroid point information and radius information,
a third method for dividing into one or more layers,
a fourth method for dividing into one or more spherical regions,
a fifth method for dividing based on the attribute information in the point cloud data or a sixth method for dividing based on a length of axes of 3D space including the point cloud data.

11. The device of claim 8, wherein the device comprises:
a combiner configured to combine the encoded geometry information and the encoded attribute information for each of the one or more bricks, the signaling information includes information of a method for combining the encoded geometry information and the encoded attribute information for each of the one or more bricks.

12. The device of claim 10, wherein when the divier divides a brick according to the sixth method, the divider performs:

first dividing step for dividing a first axis of the 3D space by a length unit of a second axis; and
second dividing step for dividing a third axis of the 3D space by the length unit of the second axis,
the signaling information includes: information representing a unit of a brick of the first dividing step and information representing a unit of a brick of the second dividing step.

13. A method of receiving point cloud data, the method comprising:

receiving a bitstream including point cloud data and signaling information;
decoding the point cloud data; and
rendering the point cloud data.

14. The method of claim 13, wherein the received point cloud data includes a geometry bitstream and an attribute bitstream, the decoding the point cloud data includes:

geometry decoding the geometry bistream of the point cloud data; and
attribute decoding the attribute bistream of the point cloud data based on reconstructed geometry information.

15. The method of claim 14, wherein the signaling information includes information representing whether the point cloud data are divided into the one or more bricks,
in response to the information representing that the point cloud data are divided into the one or more bricks, the bricks are decoded, independently.

16. The method of claim 15, wherein when the point cloud data are divided into the one or more bricks, the method comprises:
combining geometry information and attribute information of points in the independently decoded bricks, the signaling information includes information representing a division type of the one or more bricks and information related to a size of the one or more bricks.

**17.** A device of receiving point cloud data, the device comprising:

a receiver configured to receive a bitstream including point cloud data and signaling information;
a decoder configured to decode the point cloud data; and
a renderer configured to render the point cloud data.

**18.** The device of claim 17, wherein the received point cloud data includes a geometry bitstream and an attribute bitstream, the decoder includes:

a geometry decoder cofngirued to decode the geometry bistream of the point cloud data; and
an attribute decoder cofngirued to decode the attribute bistream of the point cloud data based on reconstructed geometry information.

**19.** The device of claim 18, wherein the signaling information includes information representing whether the point cloud data are divided into the one or more bricks,
in response to the information representing that the point cloud data are divided into the one or more bricks, the decoder is configured to decode the bricks, independently.

**20.** The device of claim 15, wherein when the point cloud data are divided into the one or more bricks, the device comprises:
a point combiner configured to combine geometry information and attribute information of points in the independently decoded bricks, the signaling information includes information representing a division type of the one or more bricks and information related to a size of the one or more bricks.

# FIG. 1

TRANSMISSION
DEVICE

RECEPTION
DEVICE

Point Cloud
Video
Acquisition

Renderer

Point Cloud
Video
Encoder

Point Cloud
Video
Decoder

Transmitter
(Communicati
on module)

(Compressed)
Bitstream

Receiver
(Communicati
on module)

Feedback
Information

## FIG. 2

## FIG. 3

# FIG. 4

positions                                                                  attributes

| 40000 | Transform coordinates |

| 40006 | Transform colors |

| 40001 | Quantize and remove points (voxelize) |

| 40007 | Transfer attributes |

40008

| 40002 | Analyze octree |

Reconstruct geometry

RAHT

| 40009 | Gnnerate LOD |

| 40003 | Analyze surface approximation |

| 40010 | Lifting |

40005

| 40011 | Quantize coefficients |

| 40004 | Arithmetic encode |

| 40012 | Arithmetic encode |

geometry bitstream                                              atribute bitstream

# FIG. 5

# FIG. 6

# FIG. 7

$$1 + 2 + 4 + 8 = 15$$

FIG. 8

# FIG. 9

P0  P1  P4  P3

P6  P7

P9

P5  P8  P2

| | |
|---|---|
| Original order | P0, P1, P2, P3, P4, P5, P6, P7, P8, P9 |
| LOD-based order | P0, P5, P4, P2 \| P1, P6, P3 \| P9, P8, P7 |

LOD0

LOD1

LOD2

# FIG. 10

# FIG. 11

geometry
bitstream

attribute
bitstream

11000 — Arithmetic decode

11005 — Arithmetic decode

11001 — Synthesize
octree

11006 — Inverse quantize

11002 — synthesize surface
approximation

11007

11003 — Reconstruct
geometry

RAHT

11008 — Generate
LOD

11009 — Inverse
lifting

11004 — Inverse transform
coordinates

11010 — Inverse transform colors

positions

attributes

# FIG. 12

# FIG. 13

Receiver — 13000

Reception processor — 13001

Geometry bitstream    Set value, etc.    13006    Attribute bitstream

Arithmetic decoder — 13002

Metadata parser

Arithmetic decoder — 13007

Occupancy code-based octree reconstruction processor — 13003

Inverse quantization processor — 13008

reconstruction processor (triangle reconstruction, up-sampling, voxelization) — 13004

Prediction/lifting/RAHT inverse transform processor — 13009

Inverse quantization processor — 13005

Color inverse transform processor — 13010

재구성된 위치값 공유

Renderer — 13011

# FIG. 14

# FIG. 15

Orientation/
viewport Metadata

Point Cloud Encoding

Geometry
compression

Attribute #1
compression

Point Cloud
Acquisition

Attribute #N
compression

Point Cloud
stream(s)

Auxiliary (e.g.,
metadata) data
compression

Mesh data
compression

File/segment
Encpasulation

Media track
encapsulation

Segment(s)

Metadata track
encapsulation

File

Delivery

Metadata

# FIG. 16

# FIG. 17

Home Appliance — 1750

1760 — AI Server

Smartphone — 1740

1730

1700

XR device

Cloud Network
( 5G )

1710 — Robot

HMD — 1770

Self - Driving Vehicle — 1720

# FIG. 18

18000

18000a       18001       18002       18000b

PCC data → Spatial partitioner → Geometry information encoder → Geometry information bitstream

Reconstructed geometry information —18002a

Attribute information encoder → Attribute information bitstream

18003       18000c

# FIG. 19

# FIG. 20

20000

20001

20001a — Brick #1

20001b — Brick #2

20001c — Brick #3

Partitioning

# FIG. 21

21A00

21A01

21A02-2

21A02

21A02-1

(a)

21B00 — Point cloud data

21B01 — Isbrick partitioning performed? — No

Yes

21B02 — Number of bricks = N

21B03 — Calculate density of points

21B04 — Determine quantization coefficient according to density

21B05 — Perform encoding

21B06 — Bitstream for each brick

(b)

FIG. 22

(a)

(b)

EP 3 992 911 A1

# FIG. 23

23A00

23A00

23A01

23A02

z

y

x

z

y

x

# FIG. 24

# FIG. 25

# FIG. 26

# FIG. 27

27000

27000a

Bitstream combiner

Geometry bitstream

Combination executor

Combining geometry
bitstream and
attribute bitstream

Bitstream

Attribute bitstream

27000b

27001

27000c

# FIG. 28

28000

28000a

Geometry
information bitstream

28001

Geometry
information decoder

28000c

Reconstructed
PCC data

28001a — Reconstructed
geometry information

28000b

Attribute
information bitstream

28002

Attribute
information decoder

# FIG. 29

```
                        ┌─────────────────────┐
                        │      Receiver       │──── 29000
                        └─────────────────────┘
                                  │
                                  ▼
        29001 ────┌─────────────────────────────┐◄─────────────────┐
                  │  Partitioned data input unit │◄──────────────┐  │
                  │       (1 to N units)         │               │  │
                  └─────────────────────────────┘               │  │
         Geometry bitstream    │    Attribute bitstream          │  │
         ┌────────────────────┘       └────────────────┐        │  │
         ▼                                              ▼        │  │
  29002 ─┌──────────────────────┐         ┌──────────────────────┐─ 29007
         │  Arithmetic decoder  │         │  Arithmetic decoder  │  │  │
         └──────────────────────┘         └──────────────────────┘  │  │
                  │                                  │               │  │
                  ▼                                  ▼               │  │
  29003 ─┌──────────────────────┐         ┌──────────────────────┐─ 29008
         │ Occupancy code-based │         │ Inverse quantization │  │  │
         │  octree reconstruction│        │      processor       │  │  │
         │      processor       │         └──────────────────────┘  │  │
         └──────────────────────┘                  │                │  │
                  │        └──────────┐            ▼                │  │
                  ▼                   ▼   ┌──────────────────────┐─ 29009
  29004 ─┌───────────────────────────┐   │  Prediction/lifting/ │  │  │
         │   Surface model processor  │──►│        RAHT          │  │  │
         │(triangle reconstruction,   │   │ inverse transform    │  │  │
         │up-sampling, voxelization)  │   │     processor        │  │  │
         └───────────────────────────┘   └──────────────────────┘  │  │
                  │                                  │               │  │
                  ▼                                  ▼               │  │
  29005 ─┌──────────────────────┐         ┌──────────────────────┐─ 29010
         │ Geometry reconstructor│        │ Attribute reconstructor│ │  │
         └──────────────────────┘         └──────────────────────┘  │  │
                  │      └────────────┐             │                │  │
                  ▼                   │             ▼                │  │
  29006 ─┌──────────────────────┐    │   ┌──────────────────────┐─ 29011
         │ Coordinate inverse   │    │   │ Color inverse        │  │  │
         │    transformer       │    │   │   transformer        │  │  │
         └──────────────────────┘    │   └──────────────────────┘  │  │
                  │                   └───────────│─────────────────┘  │
                  ▼                               ▼                     │
        Position values of points      Attributevalues of points ──────┘
```

```
        ┌───────────────────────────────────────────────────┐
        │                  Point combiner                    │──── 29012
        └───────────────────────────────────────────────────┘
                                  │
                                  ▼
            Position valuesand attribute values of points
```

# FIG. 30

30000

30000a

Point combiner

Geometry information
about points

Combination executor
Combininggeometry
information about points
and attribute information
about points

Point cloud data

Attribute information
about points

30000b

30001

30000c

# FIG. 31

31004

slice 0

31004

slice n

31001  31002  31003  31003  31004

SPS | GPS | APS$_0$ | APS$_1$ | TPS | Geom$_0^0$ | Attr$_0^0$ | Attr$_1^0$ | $\cdots$ | Geom$_0^n$ | Attr$_0^n$ | Attr$_1^n$ |

31004a  31004b  31004c

Geom_slice_header | Geom_slice_data

31004a-1        31004a-2

Tile(0). tile_bounding_box_xyz0;
Tile(0). tile_bounding_box_whd;
. . . . .
Tile(n). tile_bounding_box_xyz0;
Tile(n). tile_bounding_box_whd;

geom_geom_parameter_set_id;
geom_tile_id;
geom_slice_id;
geom_box_log2_scale;
geom_max_node_size_log2;
geom_num_points;

# FIG. 32

| | Descriptor | | | | | | |
|---|---|---|---|---|---|---|---|
| seq_parameter_set_rbsp( ) { | Descriptor | for( i = 0; i <sps_num_attribute_sets; i++ ) { | | attribute_label_four_bytes[ i ] | u(32) | while( more_data_in_byte_stream( ) ) | |
| profile_idc | u(8) | attribute_dimension[ i ] | ue(v) | } | | sps_extension_data_flag | u(1) |
| profile_compatibility_flags | u(24) | attribute_instance_id[ i ] | ue(v) | partitioning_enabling_flag { | u(1) | byte_alignment( ) | |
| level_idc | u(8) | attribute_bitdepth[ i ] | ue(v) | split_recursive_enabling_flag | u(1) | } | |
| sps_bounding_box_present_flag | u(1) | attribute_cicp_colour_primaries[ i ] | ue(v) | if (partitioning_enabling_flag) { | | | |
| if( sps_bounding_box_present_flag ) { | | attribute_cicp_transfer_characteristics[ i ] | ue(v) | multiple_brick_partitioning_flag | ue(1) | | |
| sps_bounding_box_offset_x | se(v) | attribute_cicp_matrix_coeffs[ i ] | ue(v) | partitioning_unit_size | ue(v) | | |
| sps_bounding_box_offset_y | se(v) | attribute_cicp_video_full_range_flag[ i ] | u(1) | partitioning_type_index | ue(v) | | |
| sps_bounding_box_offset_z | se(v) | known_attribute_label_flag[ i ] | u(1) | } | | | |
| sps_bounding_box_scale_factor | ue(v) | attribute_cicp_colour_primaries[ i ] | ue(v) | If(split_recursive_enabling_flag) { | | | |
| sps_bounding_box_size_width | ue(v) | attribute_cicp_transfer_characteristics[ i ] | ue(v) | partition_current_unit | ue(v) | | |
| sps_bounding_box_size_height | ue(v) | attribute_cicp_matrix_coeffs[ i ] | ue(v) | } | | | |
| sps_bounding_box_size_depth | ue(v) | attribute_cicp_video_full_range_flag[ i ] | u(1) | } | | | |
| } | | known_attribute_label_flag[ i ] | u(1) | combining_filter_index | ue(v) | | |
| sps_source_scale_factor | u(32) | if( known_attribute_label_flag[ i ] ) | | duplicated_attribute_index | ue(v) | | |
| sps_seq_parameter_set_id | ue(v) | known_attribute_label[ i ] | ue(v) | sps_extension_present_flag | u(1) | | |
| sps_num_attribute_sets | ue(v) | else | | if( sps_extension_present_flag ) | | | |

EP 3 992 911 A1

# FIG. 33

| | Descriptor | | Descriptor | | Descriptor |
|---|---|---|---|---|---|
| tile_parameter_set( ) { | | brick_density_quantization_step | ue(v) | if (brick_tiling_type == 5) { | u(1) |
| num_tiles | ue(v) | } | | referenced_attribute_type | ue(v) |
| for( i = 0; i < num_tiles; i++ ) { | | if (brick_tiling_type == 2) { | u(1) | referenced_attribute_type_range | ue(v) |
| tile_bounding_box_offset_x[ i ] | se(v) | bounding_box_radius | ue(v) | referenced_attribute_type_value | ue(v) |
| tile_bounding_box_offset_y[ i ] | se(v) | central_node_xyz | ue(v) | } | |
| tile_bounding_box_offset_z[ i ] | se(v) | moving_direction_vector | ue(v) | if (brick_tiling_type == 6) { | u(1) |
| tile_bounding_box_scale_factor[ i ] | ue(v) | use_identical_bounding_box_information_flag | ue(v) | divide_mid_length_axis | ue(v) |
| tile_bounding_box_size_width[ i ] | ue(v) | } | | } | |
| tile_bounding_box_size_height[ i ] | ue(v) | if (brick_tiling_type == 3) { | u(1) | } | |
| partitioning_enabling_flag { | u(1) | enable_sorting_flag | ue(v) | } | |
| | | } | | combining_filter_index | ue(v) |
| if (partitioning_enabling_flag) { | | if (brick_tiling_type == 4) { | u(1) | duplicated_attribute_index | ue(v) |
| multiple_brick_partitioning_flag | ue(v) | sphere_or_oval_flag | ue(v) | brick_unit_information | ue(v) |
| partitioning_unit_size | ue(v) | center_point_xyz | ue(v) | } | |
| partitioning_type_index | ue(v) | radius_distance | ue(v) | | |
| if (brick_tiling_type == 1) { | u(1) | azimuth_angle | | | |
| brick_unit_information | ue(v) | } | | | |

EP 3 992 911 A1

## FIG. 34

| geometry_parameter_set( ) { | Descriptor | partitioning_type_index | ue(v) | center_point_xyz | ue(v) | gps_extension_present_flag | u(1) |
|---|---|---|---|---|---|---|---|
| gps_geom_parameter_set_id | ue(v) | if (brick_tiling_type == 1) { | u(1) | radius_distance | ue(v) | if( gps_extension_present_flag ) | |
| gps_seq_parameter_set_id | ue(v) | brick_unit_information | ue(v) | azimuth_angle | ue(v) | while( more_data_in_byte | |
| gps_box_present_flag | u(1) | brick_density_quantization_step | ue(v) | } | | _stream( ) ) | |
| unique_geometry_points_flag | u(1) | } | | if (brick_tiling_type == 5) { | u(1) | gps_extension_data_flag | u(1) |
| neighbour_context_restriction_flag | u(1) | if (brick_tiling_type == 2) { | u(1) | referenced_attribute_type | ue(v) | if( gps_extension_present_flag ) | |
| inferred_direct_coding_mode_enabled_flag | u(1) | bounding_box_radius | ue(v) | referenced_attribute_type_range | ue(v) | } | |
| bitwise_occupancy_coding_flag | u(1) | central_node_xyz | ue(v) | referenced_attribute_type_value | ue(v) | | |
| child_neighbours_enabled_flag | u(1) | moving_direction_vector | ue(v) | } | | | |
| geom_occupancy_ctx_reduction_factor | ue(v) | use_identical_bounding_box | ue(v) | if (brick_tiling_type == 6) { | u(1) | | |
| log2_neighbour_avail_boundary | ue(v) | _information_flag | | divide_mid_length_axis | ue(v) | | |
| log2_intra_pred_max_node_size | ue(v) | } | | } | | | |
| log2_trisoup_node_size | ue(v) | if (brick_tiling_type == 3) { | u(1) | } | | | |
| partitioning_enabling_flag { | u(1) | enable_sorting_flag | ue(v) | } | | | |
| if (partitioning_enabling_flag) { | | } | | combining_filter_index | ue(v) | | |
| multiple_brick_partitioning_flag | ue(v) | if (brick_tiling_type == 4) { | u(1) | duplicated_attribute_index | ue(v) | | |
| partitioning_unit_size | ue(v) | sphere_or_oval_flag | ue(v) | brick_unit_information | ue(v) | | |

## FIG. 35

| geometry_slice_header( ) { | Descriptor |
|---|---|
| gsh_geometry_parameter_set_id | ue(v) |
| gsh_tile_id | ue(v) |
| gsh_slice_id | ue(v) |
| if( gps_box_present_flag ) { | |
| gsh_box_log2_scale | ue(v) |
| gsh_box_origin_x | ue(v) |
| gsh_box_origin_y | ue(v) |
| gsh_box_origin_z | ue(v) |
| } | |
| gsh_log2_max_nodesize | ue(v) |
| gsh_points_number | ue(v) |
| partitioning_enabling_flag { | u(1) |
| if (partitioning_enabling_flag) { | |
| multiple_brick_partitioning_flag | ue(v) |
| partitioning_unit_size | ue(v) |
| partitioning_type_index | ue(v) |

| if (brick_tiling_type == 1) { | u(1) |
|---|---|
| brick_unit_information | ue(v) |
| brick_density_quantization_step | ue(v) |
| } | |
| if (brick_tiling_type == 2) { | u(1) |
| bounding_box_radius | ue(v) |
| central_node_xyz | ue(v) |
| moving_direction_vector | ue(v) |
| use_identical_bounding_box _information_flag | ue(v) |
| } | |
| if (brick_tiling_type == 3) { | u(1) |
| enable_sorting_flag | ue(v) |
| } | |
| if (brick_tiling_type == 4) { | u(1) |
| sphere_or_oval_flag | ue(v) |
| center_point_xyz | ue(v) |

| radius_distance | ue(v) |
|---|---|
| azimuth_angle | |
| } | |
| if (brick_tiling_type == 5) { | u(1) |
| referenced_attribute_type | ue(v) |
| referenced_attribute_type_range | ue(v) |
| referenced_attribute_type_value | ue(v) |
| } | |
| if (brick_tiling_type == 6) { | u(1) |
| divide_mid_length_axis | ue(v) |
| } | |
| } | |
| } | |
| combining_filter_index | ue(v) |
| duplicated_attribute_index | ue(v) |
| brick_unit_information | ue(v) |
| byte_alignment( ) | |
| } | |

# FIG. 36

| attribute_slice_header( ) { | Descriptor | use_identical_bounding_box | ue(v) | if (brick_tiling_type == 6) { | u(1) |
|---|---|---|---|---|---|
| ash_attr_parameter_set_id | ue(v) | nformation_flag | | divide_mid_length_axis | ue(v) |
| ash_attr_sps_attr_idx | ue(v) | } | | } | |
| ash_attr_geom_slice_id | ue(v) | if (brick_tiling_type == 3) { | u(1) | } | |
| partitioning_enabling_flag { | u(1) | enable_sorting_flag | ue(v) | } | |
| if (partitioning_enabling_flag) { | | } | | combining_filter_index | ue(v) |
| multiple_brick_partitioning_flag | ue(v) | if (brick_tiling_type == 4) { | u(1) | duplicated_attribute_index | ue(v) |
| partitioning_unit_size | ue(v) | sphere_or_oval_flag | ue(v) | brick_unit_information | ue(v) |
| partitioning_type_index | ue(v) | center_point_xyz | ue(v) | byte_alignment( ) | |
| if (brick_tiling_type == 1) { | u(1) | radius_distance | ue(v) | } | |
| brick_unit_information | ue(v) | azimuth_angle | | | |
| brick_density_quantization_step | ue(v) | } | | | |
| } | | if (brick_tiling_type == 5) { | u(1) | | |
| if (brick_tiling_type == 2) { | u(1) | referenced_attribute_type | ue(v) | | |
| bounding_box_radius | ue(v) | referenced_attribute_type_range | ue(v) | | |
| central_node_xyz | ue(v) | referenced_attribute_type_value | ue(v) | | |
| moving_direction_vector | ue(v) | } | | | |

EP 3 992 911 A1

# FIG. 37

Encoding acquired point cloud data — 37001

Transmitting bitstream including theencoded point cloud data and signaling information about thepoint cloud data — 37002

# FIG. 38

```
┌─────────────────────────────────────┐
│  Receiving bitstream including point  │
│    cloud data and signaling          │ ~37000
│    information                        │
└─────────────────────────────────────┘
                 │
                 ▼
┌─────────────────────────────────────┐
│                                       │
│     Decoding thepoint cloud data     │ ~37001
│                                       │
└─────────────────────────────────────┘
                 │
                 ▼
┌─────────────────────────────────────┐
│                                       │
│  Rendering the decoded point cloud   │ ~37002
│           data                        │
└─────────────────────────────────────┘
```

## INTERNATIONAL SEARCH REPORT

| International application No. |
| --- |
| **PCT/KR2020/002042** |

**A. CLASSIFICATION OF SUBJECT MATTER**

*G06T 9/00(2006.01)i, H04N 19/30(2014.01)i*

According to International Patent Classification (IPC) or to both national classification and IPC

**B. FIELDS SEARCHED**

Minimum documentation searched (classification system followed by classification symbols)
G06T 9/00; G06T 15/08; G06T 17/00; G06T 17/10; H04N 19/132; H04N 19/182; H04N 19/503; H04N 19/60; H04N 19/30

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: point, cloud, encoding, transmit, divide

**C. DOCUMENTS CONSIDERED TO BE RELEVANT**

| Category* | Citation of document, with indication, where appropriate, of the relevant passages | Relevant to claim No. |
| --- | --- | --- |
| X | US 2017-0347122 A1 (MICROSOFT TECHNOLOGY LICENSING, LLC.) 30 November 2017 See paragraphs [0007], [0055], [0062] and [0083]; claims 1, 3, 11 and 14; and figures 1-4b. | 1-20 |
| A | KR 10-2018-0122947 A (THOMSON LICENSING) 14 November 2018 See paragraphs [0095]-[0096]; and claim 4. | 1-20 |
| A | WO 2019-011637 A1 (INTERDIGITAL VC HOLDINGS, INC.) 17 January 2019 See claims 1-8. | 1-20 |
| A | US 2014-0219346 A1 (NOKIA CORPORATION) 07 August 2014 See paragraphs [0007]-[0008]; and claim 1. | 1-20 |
| A | KR 10-2014-0007367 A (MICROSOFT CORPORATION) 17 January 2014 See paragraphs [0077]-[0082]; claim 1; and figures 7-8. | 1-20 |

☐ Further documents are listed in the continuation of Box C. ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 JUNE 2020 (11.06.2020) | **11 JUNE 2020 (11.06.2020)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

| Patent document cited in search report | Publication date | Patent family member | Publication date |
|---|---|---|---|
| US 2017-0347122 A1 | 30/11/2017 | None | |
| KR 10-2018-0122947 A | 14/11/2018 | BR 102018009143 A2 | 19/03/2019 |
| | | CA 3003608 A1 | 04/11/2018 |
| | | CN 108810571 A | 13/11/2018 |
| | | EP 3399757 A1 | 07/11/2018 |
| | | EP 3399758 A1 | 07/11/2018 |
| | | JP 2018-198421 A | 13/12/2018 |
| | | MX 2018005496 A | 09/11/2018 |
| | | RU 2018-115810 A | 30/10/2019 |
| | | US 2018-0324240 A1 | 08/11/2018 |
| WO 2019-011637 A1 | 17/01/2019 | CN 110870318 A | 06/03/2020 |
| | | EP 3429207 A1 | 16/01/2019 |
| | | KR 10-2020-0024219 A | 06/03/2020 |
| US 2014-0219346 A1 | 07/08/2014 | CA 2897152 A1 | 10/07/2014 |
| | | CA 2897152 C | 05/03/2019 |
| | | CN 105027567 A | 04/11/2015 |
| | | EP 2941868 A1 | 11/11/2015 |
| | | EP 2941868 A4 | 13/07/2016 |
| | | JP 2016-506687 A | 03/03/2016 |
| | | JP 6290924 B2 | 07/03/2018 |
| | | KR 10-1825575 B1 | 05/02/2018 |
| | | KR 10-2015-0103728 A | 11/09/2015 |
| | | US 10616573 B2 | 07/04/2020 |
| | | WO 2014-106692 A1 | 10/07/2014 |
| KR 10-2014-0007367 A | 17/01/2014 | CN 102622776 A | 01/08/2012 |
| | | CN 102622776 B | 13/01/2016 |
| | | EP 2671210 A2 | 11/12/2013 |
| | | EP 2671210 A4 | 29/03/2017 |
| | | EP 2671210 B1 | 07/08/2019 |
| | | HK 1172131 A1 | 19/08/2016 |
| | | JP 2014-507723 A | 27/03/2014 |
| | | JP 5906258 B2 | 20/04/2016 |
| | | KR 10-1861313 B1 | 28/05/2018 |
| | | US 08587583 B2 | 19/11/2013 |
| | | US 2012-0194516 A1 | 02/08/2012 |
| | | WO 2012-106069 A2 | 09/08/2012 |
| | | WO 2012-106069 A3 | 18/10/2012 |

Form PCT/ISA/210 (patent family annex) (January 2015)